# EUROPEAN PATENT APPLICATION

(11) **EP 1 071 223 A2**
(43) Date of publication of application: **24.01.2001**
(21) Application number: 00306088.6
(22) Date of filing: 18.07.2000
(51) Int. Cl.: H04B 1/707

(54) **CDMA base station apparatus, and CDMA mobile communication system**

(30) Priority: 19.07.1999 JP 20427999; 26.04.2000 JP 2000125268; 26.04.2000 JP 2000125269
(71) Applicant: YRP Mobile Telecommunications Key Technology Research Laboratories Co., Ltd., Yokosuka-shi, Kanagawa-ken 239-0847 (JP); Oki Electric Industry Company, Limited, Tokyo 105-8460 (JP)
(72) Inventor: Takeo, Kohji, Yokohama 236-0031 (JP)
(74) Representative: Dempster, Benjamin John Naftel

(57) **Abstract**

In a receiver arrangement of a base station, sync circuit sections and demodulating circuit sections are separately arranged. For receiving a 2-multicode signal from a data user, a combination of only one sync circuit section (13) and two demodulating circuit sections (23, 24) is used to reduce the required number of the sync circuit sections. Similarly, in a transmitter arrangement of a base station, only one sync signal inserting circuit is used for transmitting a multi-code signal. A system restrains the information transmitting rate of a mobile terminal located near a cell boundary, or when the communication quality of a neighboring base station is deteriorated. Respective code signals are put priorities according to their importance, so that a receiver side can determine allocation of demodulating circuits in accordance with the priorities of respective code signals.

## Description

### BACKGROUND OF THE INVENTION

The present invention relates to a base station apparatus which are based on a code division multiple access, hereinafter referred to CDMA, and a related mobile communication system.

In addition to portable telephones, recent techniques for mobile radio communication systems are required to effectively accommodate multimedia terminals including various data devices and image transmission/reception devices whose information transmitting rates are different from each other. Among this kind of CDMA techniques, well-known are a variable spreading factor transmission and a multi-code transmission.

The following is a document belonging to this technical field.

"Next Generation Mobile Radio Access for Multimedia Transmission: W-CDMA" by M. Sawahashi and F. Adachi, Technical Report of IEICE, SST 98-41 (1998-12), pp.1-8

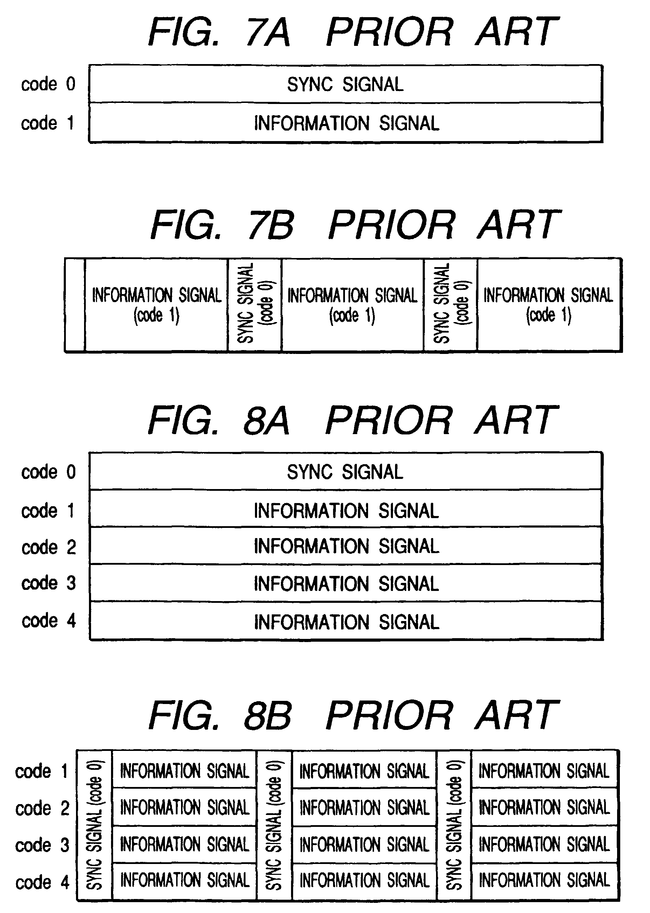

Figs. 7A, 7B, 8A, and 8B simply explain the multi-code transmission. Hereinafter, an uplink transmission from a mobile terminal to a base station will be chiefly explained. Figs. 7A and 7B suppose transmission of a voice signal, while Figs. 8A and 8B suppose a multi-code transmission applied to a data signal whose transmission rate is four times the transmission rate of the voice signal.

Fig. 7A shows a voice signal (i.e., information signal represented by +1 or -1) which is spread by a spreading code and transmitted from a mobile terminal. In the drawing, the voice signal is spread by using a spreading code of code 1. The number of code is generally determined by a spreading factor. The base station designates a code to be used at the beginning of communication.

According to the CDMA techniques, a transmitter and a receiver use the same code to spread or despread a signal. Accurate signal synchronization is thus required at the receiver side. Accordingly, to facilitate sync acquisition, the information signal is generally transmitted together with a sync signal. The sync signal may be referred to as a pilot signal. The sync signal is not subjected to information modulation. In other words, the sync signal consists of all +1 or all -1. Thus, the receiver can handle the sync signal as a known information signal. In the drawing, a sync signal is spread by using a code 0. The sync signal and the information signal are transmitted synchronously. Code 0 and code 1 are orthogonal with each other. Accordingly, no interference occurs between the information signal and the sync signal in a same mobile terminal. On the other hand, there is a possibility of causing any interference between signals of different terminals. To prevent such interference, it is preferable that a transmission power for the sync signal is smaller than that of the information signal.

Fig. 7B shows an alternate allocation of information signals and sync signals, according to which there is no necessity of always transmitting the sync signal and therefore the interference can be suppressed. In determining the transmission intervals of sync signals and a duration of each sync signal, a change of a propagation path etc. should be considered.

Figs. 8A and 8B show examples of the multi-code transmission, in which the information transmitting rate of a signal is four times the voice transmission rate. As shown in Fig. 8A, an information signal is converted into four parallel information signals. The parallel information signals are spread by using spreading codes 1, 2, 3 and 4, respectively. One sync signal, which is spread by using a spreading code 0, and the four parallel information signals are transmitted synchronously. Respective codes are orthogonal with each other. No interference occurs between the signals.

Fig. 8B shows another multi-code transmission, in which sync signals and information signals are alternately allocated. In the drawing, a power for transmitting each sync signal is equivalent to a total power of transmitting four codes. However, it is possible to reduce the power for transmitting each sync signal so as to suppress an interference amount of an overall system.

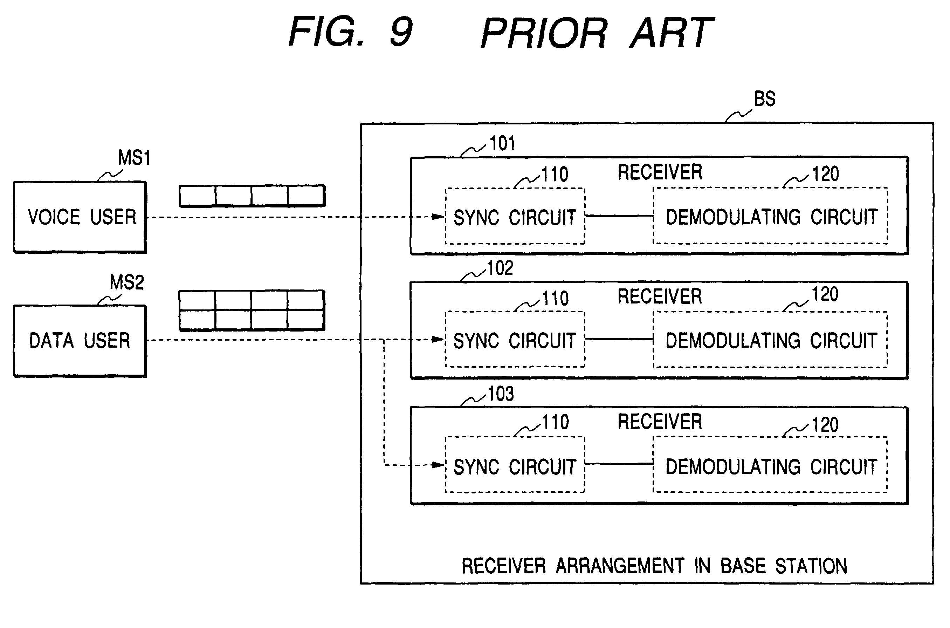

Fig. 9 shows an example of a practical arrangement for receiving such multi-code signals in a base station. As shown in the drawing, the base station BS comprises a plurality of receivers 101, 102 and 103. The receiver 101 receives a voice data sent from a mobile terminal MS1 which is a voice user. The receivers 102 and 103 cooperatively receive a multi-code signal sent from another mobile terminal MS2 which is a data user. The multi-code number of this multi-code signal is 2. The total number of receivers provided in the base station BS should be determined with reference to estimated terminal numbers, or a system allowance number depending on an interference amount. Usually, the receivers used in the CDMA system are RAKE receivers which can combine and demodulate a plurality of signals arriving via different propagation paths.

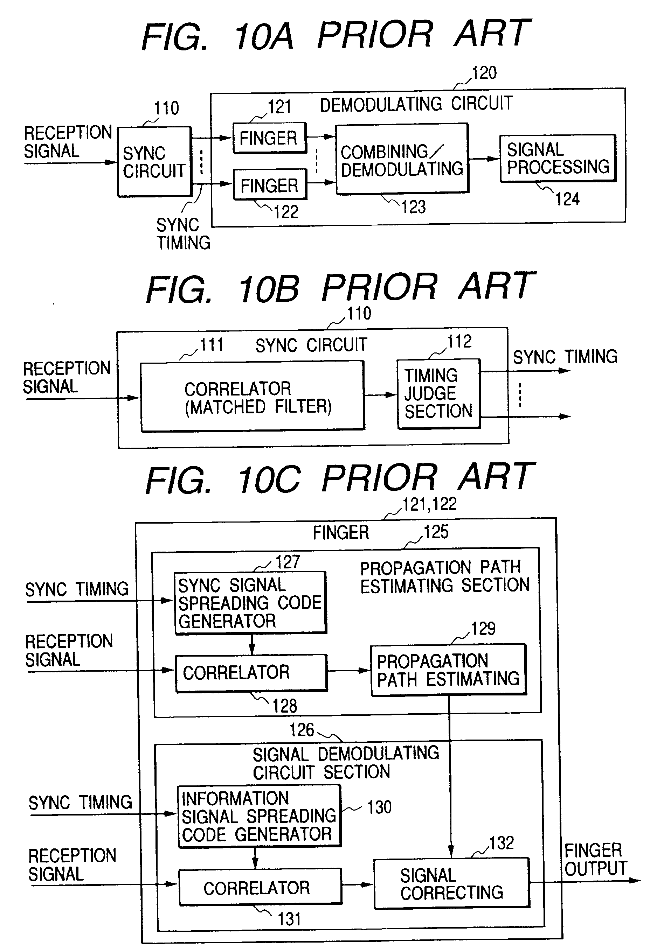

Hereinafter, an arrangement of the above-described RAKE receivers 101 to 103 will be explained with reference to Figs. 10A to 10C. As shown in Fig. 10A, each receiver comprises a sync acquisition/ tracking circuit 110 for implementing sync acquisition and tracking processing for a signal in response to the sync signal. The sync acquisition/ tracking circuit 110 may be simply referred to as a "sync circuit section" in the following description. Each receiver further comprises a demodulating circuit section 120 which implements demodulation of the information signal. As shown in Fig. 10B, the sync circuit section 110 comprises a correlation arithmetic section 111 and a timing judge section 112. The correlation arithmetic section 111 is a correlator such as a matched filter. Ordinarily, the sync circuit section 110 acquisitions two to four signals arriving via different propagation paths. The sync circuit section 110 sends sync information (i.e., sync timing information) to an associated demodulating circuit section 120. The demodulating circuit section 120 comprises a plurality of fingers 121 to 122 which correspond to respective propagation paths. Each of the fingers 121 to 122 implements a despreading for an information signal arriving via a corresponding propagation path. A combining/demodulating unit 123 adjusts a delay time and a phase of each signal sent from each finger 121, and then combines and demodulates the adjusted signals. A signal processing section 124 implements error correction processing applied to the signal received from the combining/demodulating unit 123, thereby obtaining an information signal which is later spread.

Fig. 10C is a circuit diagram showing an internal arrangement of the fingers 121 to 122. As shown in the drawing, each of the fingers 121 to 122 comprises a propagation path estimating section 125 and a signal demodulating circuit section 126. The propagation path estimating section 125 consists of a sync signal spreading code generator 127, a correlation arithmetic processing section (i.e., correlator) 128, and a propagation path estimating circuit section 129. The sync signal spreading code generator 127 generates a spreading code replica code 0 corresponding to the sync signal in response to a sync timing signal of the propagated signal corresponding to this finger. The sync timing signal is supplied from the timing judge section 112. The correlation arithmetic processing section 128 obtains a correlation between the spreading code replica "code 0" and the reception signal. The propagation path estimating circuit section 129 estimates the propagation characteristics (i.e., propagation loss and signal phase in this propagation path) of a propagation path corresponding to this finger based on an output of the correlation arithmetic processing section 128.

The signal demodulating circuit section 126 consists of an information signal spreading code generator 130, a correlation arithmetic processing section (i.e., correlator) 131, and a signal correcting section 132. The information signal spreading code generator 130 generates a spreading code replica (e.g., code 1) of the information signal in response to a sync timing signal corresponding to this finger. The sync timing signal is supplied from the timing judge section 112 of the sync circuit 110. The correlation arithmetic processing section 131 calculates a correlation between the spreading replica and the reception signal. The signal correcting section 132 implements phase correction processing applied to an output of the correlator 131 based on an output signal of the propagation path estimating circuit section 129.

As described above, the sync signal is a known signal. Thus, it is possible to know the propagation characteristics including the propagation loss and the signal phase in the propagation path. The signal correcting section 132 can correct an output of the correlator 131 by using a signal representing the propagation characteristics sent from the propagation path estimating circuit section 129. As described above, outputs of respective fingers are combined at a maximum ratio and demodulated in the combining/demodulating unit 123.

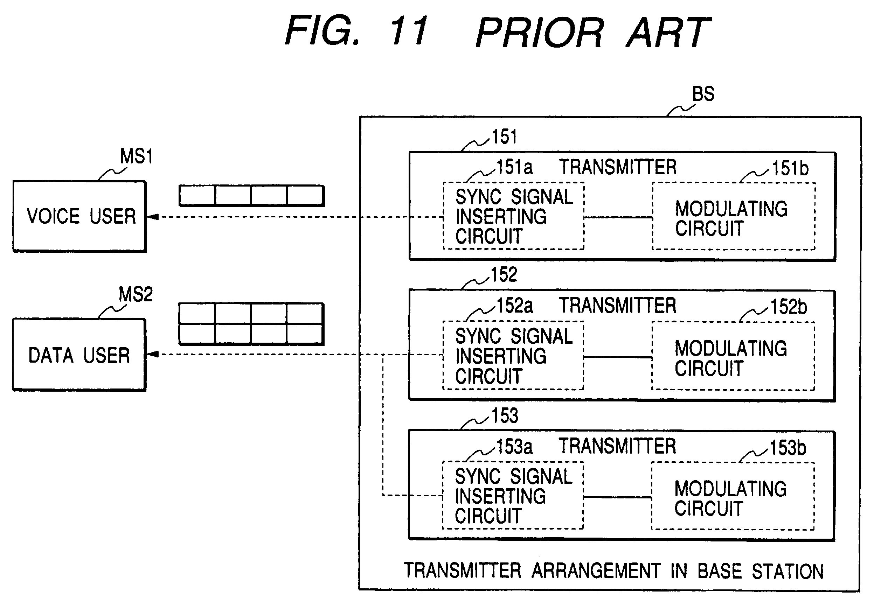

Fig. 11 is a circuit diagram showing a transmitter arrangement of a base station apparatus. As shown in the drawing, the base station BS comprises a plurality of transmitters 151 to 153. Each of the transmitters 151 to 153 comprises a modulating circuit (151b-153b) and a sync signal inserting circuit (151a-153a). The modulating circuit (151b-153b) implements a spreading modulation using a spreading signal for transmitting an information signal. The sync signal inserting circuit (151a-153a) adds a sync signal to an output of the corresponding modulating circuit (151b-153b). Only one transmitter 151 is used to transmit a signal to a mobile terminal MS1 (i.e., a voice user). On the other hand, a 2-multicode signal (i.e., a multi-code signal having a multi-code number of 2) is sent to another mobile terminal MS2 (i.e., a data user). In this case, prior to transmission, an information signal is converted into two parallel transmission signals which are entered into two transmitters 152 and 153, respectively. In the modulation circuit (152b, 153b) in each transmitter, the entered signal is spreading modulated by using a spreading signal "code 1"or "code 2". A sync signal is added to the spreading-modulated signal in the corresponding sync signal inserting circuit (152a, 153a). Then, outputs of the transmitters 152 and 153 are summed to form a multi-code signal, and then converted into a high-frequency signal. This high-frequency signal is transmitted to the mobile terminal MS2 (i.e., the data user).

Meanwhile, according to the variable spreading rate transmission, a spreading factor of an information signal is substantially determined by its transmission rate. When an information signal transmitted in a same frequency band is two times faster, its spreading factor is reduced to one half. On the contrary, when the transmission rate is reduced to one half, the spreading factor is doubled.

According to the CDMA techniques, all stations use a same frequency band and therefore an interference amount substantially determines a system capacity. Hence, transmission power control techniques for controlling a transmission power of each station are employed as an important technique for suppressing interferences as well as adjusting the communication qualities of all base stations to a same level.

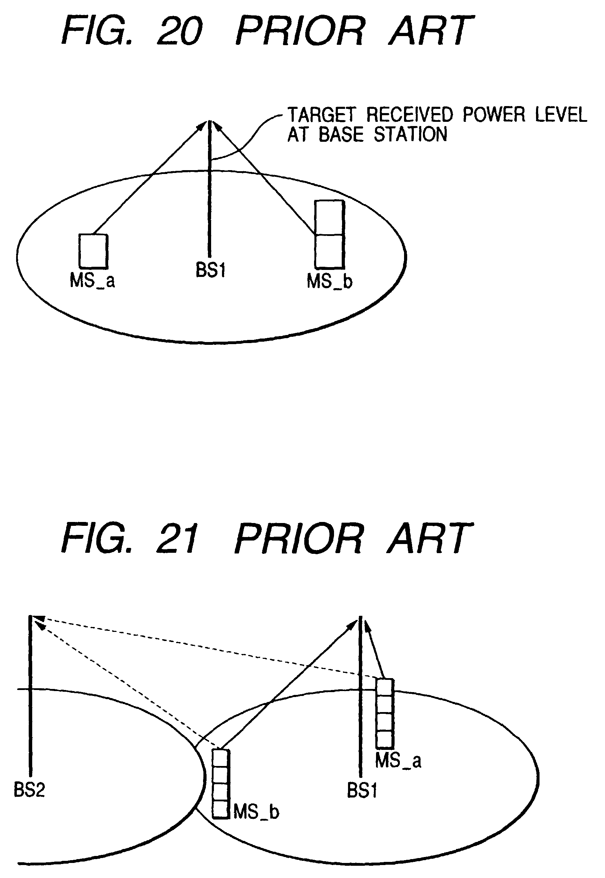

Fig. 20 shows a simple example of an uplink transmission power control. In the drawing, mobile terminals MS_a and MS_b are connected to a base station BS1. The base station BS1 sets a target power value of a reception signal. It is preferable that the target value is equal to or larger than a guaranteed communication quality level which is guaranteed by a system. In each of the mobile terminals MS_a and MS_b, adjustment of its transmission power is performed in such a manner that a signal arriving at the base station BS1 always keeps a power level equivalent to the target value set by the base station BS1. Furthermore, according to another known technique, the base station BS1 variably controls the target power value of a reception signal in accordance with the communication quality.

In this manner, all of mobile terminals in a cell perform a transmission power control with reference to a target value so as to maintain the uplink communication quality to a constant level.

When the mobile terminal MS_b is a multi-code mobile terminal which transmits a multi-code signal (e.g., a multi-code signal having a multi-code number 2 according to the example shown in the drawing), the mobile terminal MS_b controls its transmission power so that each code signal has a power level equivalent to the target value. In other words, a mobile terminal, when transmitting a multi-code signal of a multi-code number 2, is required to double its transmission power compared with a transmission power of another mobile terminal which is located at a same position for transmitting a single code signal. However, no interference occurs between multi-code signals transmitted from the same mobile terminal because they are synchronized. Accordingly, there is a possibility that the transmission power can be reduced.

Although the above-described example is based on a system wherein the transmission power of each mobile terminal is controlled in such a manner that the power value of a reception signal at the base station becomes a target value, also known is a downlink transmission power control. According to the downlink transmission power control, the base station controls the transmission power of a signal sent to each mobile terminal so that the power value of a reception signal at each mobile terminal can be equalized to a target value.

As described above, the transmission power of a mobile terminal transmitting a multi-code signal having a high multi-code number is fairly larger than that of a mobile terminal transmitting a single code signal. The ratio of the transmission power required for transmitting a multi-code signal to the transmission power required for transmitting a single code signal is substantially equal to a multi-code number of the multi-code signal. Accordingly, a multi-code signal transmitted from a mobile terminal, when having a high multi-code number, will cause a large interference with a connected base station as well as with neighboring base stations.

Fig. 21 shows a simple example, in which BS1 and BS2 are base stations neighboring each other. Both of mobile terminals MS_a and MS_b having high information transmitting rates are connected to the same base station BS1. Each of the mobile terminals MS_a and MS_b transmits a multi-code signal having a multi-code number of 4, and controls the transmission power of the multi-code signal transmitted to the base station BS1. More specifically, when the base station BS1 receives the multi-code signal sent from each of the mobile terminals MS_a and MS_b, the power of the received multi-code signal is four times the target power value of a reception signal being set by the base station BS1. If communication quality of the base station BS1 is deteriorated, the signal transmitted from a multi-code mobile terminal will further deteriorate the communication quality. Accordingly, when receiving a connection request from a multi-code mobile terminal, the base station BS1 makes a judgement with reference to present communication quality thereof whether this connection request should be accepted or rejected, otherwise judges whether the connection request should be conditionally accepted only when the code number is reduced.

It is now assumed that the mobile terminal MS_a is located closely to the base station BS1 as shown in the drawing. The required transmission power of each code transmitted from this mobile terminal MS_a is relatively small. As the mobile terminal MS_a is far from the neighboring base station BS2, it is believed that the transmission signal of the mobile terminal MS_a does not cause a large interference with the base station BS2. On the other hand, the other mobile terminal MS_b is located closely to a cell boundary of the base station BS1. The required transmission power of each code transmitted from this mobile terminal MS_b is large. The mobile terminal MS_b must increase a transmission power for transmitting four codes at a time. Furthermore, the mobile terminal MS_b is relatively close to the neighboring base station BS2. Thus, the transmission signal of the mobile terminal MS_b may cause a large interference with the base station BS2, deteriorating the communication quality of the base station BS2.

As described above, the base station BS1 exclusively performs the judgement whether or not the mobile terminal MS_b should be connected. Thus, the neighboring base station BS2 itself cannot solve the large interference caused by the neighboring cell.

As described above, the multi-code transmission flexibly changes the information transmitting rate of a signal to be transmitted by changing the total number of codes simultaneously transmitted by a multi-code signal. Accordingly, it is possible for the same user to effectively transmit various information of a plurality of media, including voice, image and data, whose transmitting conditions are different from each other.

Changing the multi-code number is easily realized when a transmitter side comprises a plurality of code signal generating circuits corresponding to a multi-code number representing the maximum transmission rate and a receiver side comprises a plurality of demodulating circuits corresponding to the above multi-code number.

However, at the base station side, the number of receiving devices, such as demodulating circuits in an uplink, is finite and also the number of transmitting devices, such as code signal generating circuits (i.e., modulating circuits) in a downlink, is finite too. To suppress investment for transmitting/receiving equipments, the facility scale of the base station must be determined in a most efficient manner. In general, a goal in designing the facility is set to a several % level in the occurrence of rejection when the base station receives a connection request from a mobile terminal.

In the variable rate transmission based on multi-code signals, the multi-code number may suddenly cause a large change. In such a case, the base station may not be able to allocate a sufficient number of demodulating circuits or code signal generating circuits (i.e., modulating circuits) in response to the change of the multi-code number. This will cause a problem when real-time information such as voice information and image information is transmitted.

### SUMMARY OF THE INVENTION

As described above, the demodulation circuit section of each receiver executes the demodulation for a signal equivalent to one code. Accordingly, to demodulate a multi-code signal, the demodulation circuits are required as much as the number of the multi-codes. According to the circuit arrangement shown in Fig. 9, the number of the receivers 102 and 103 is identical with the multi-code number.

However, as explained in Figs. 8A and 8B, the sync signal is commonly provided for respective code signals. Therefore, to demodulate a multi-code signal, the same sync acquisition/ tracking operation is performed for a plurality of receivers. In other words, the sync acquisition/ tracking circuits are not required so much as the multi-code number. Similarly, in the transmitter side, the sync signal inserting circuits are not required so much as the multi-code number.

In view of the above, the present invention has an object to provide a CDMA base station apparatus which is capable of reducing the circuit scale of the base station.

Furthermore, in the CDMA base station apparatus having a downsized circuit scale, the present invention has an object to prevent a mobile terminal from being rejected to connect to the base station.

Moreover, the present invention has an object to provide a CDMA base station apparatus which is capable of flexibly responding to a change of the multi-code number (i.e., change of the transmission rate) during communication.

To accomplish this and other related objects, the present invention provides a base station apparatus for a CDMA mobile communication system, comprising a receiver arrangement in which sync acquisition/ tracking circuit sections and demodulation circuit sections are separately arranged, and a plurality of receivers, each having a single sync acquisition/ tracking circuit section and at least one single demodulation circuit section. In this base station apparatus, demodulation of a multi-code signal is implemented by using a designated one of the plurality of receivers. The designated receiver has demodulation circuit sections a total number of which corresponds to a code number of the multi-code signal. And, sync acquisition and tracking processing for the multi-code signal is implemented in the single circuit sync acquisition/ tracking circuit equipped in the designated receiver, while the multi-code signal is demodulated in the plurality of demodulation circuit sections equipped in the designated receiver.

Furthermore, the present invention provides a base station apparatus for a CDMA mobile communication system, comprising a receiver arrangement in which sync acquisition/ tracking circuit sections and demodulation circuit sections are separately arranged, and a connecting means for adaptively connecting an output of one of the sync acquisition/ tracking circuit sections to an arbitrary number of the demodulation circuit sections. In this base station, demodulation of a multi-code signal is implemented by selecting one of the sync acquisition/ tracking circuit sections to perform sync acquisition and tracking processing for the multi-code signal, and by causing the connecting means to adaptively connect an output of the selected sync acquisition/ tracking circuit section to at least one of the demodulation circuit sections a total number of which corresponds to a code number of the multi-code signal, thereby demodulating the multi-code signal.

Furthermore, the present invention provides a base station apparatus for a CDMA mobile communication system, comprising a receiver arrangement in which sync acquisition/ tracking circuit sections and demodulation circuit sections are separately arranged, a plurality of receivers each comprising only one sync acquisition/ tracking circuit section and only one demodulation circuit section, and the receiver arrangement comprising at least one additional demodulation circuit section a total number of which is smaller by 1 than a code number of a multi-code signal to be received. In this base station apparatus, demodulation of the multi-code signal is implemented by using a designated one of the plurality of receivers and at least one additional demodulation circuit section, in which only one sync acquisition/ tracking circuit section of the designated receiver performs sync acquisition and tracking processing for the multi-code signal, while only one demodulation circuit section in the designated receiver and the above at least one additional demodulation circuit section cooperatively demodulate the multi-code signal.

Furthermore, the present invention provides a base station apparatus for a base station apparatus for a CDMA mobile communication system, comprising a receiver arrangement in which a plurality of sync acquisition/ tracking circuit sections, a plurality of propagation path estimating sections being connected to the sync acquisition/ tracking circuit sections respectively, and signal demodulating circuit sections are separately arranged, and a connecting means for adaptively connecting an output of one of the propagation path estimating sections to an arbitrary number of the signal demodulating circuit sections. In this base station, demodulation of a multi-code signal is implemented by using one of the plurality of sync acquisition/ tracking circuit sections to perform sync acquisition and tracking processing for the multi-code signal, and using the propagation path estimating section connected to the one of the sync acquisition/ tracking circuit sections to estimate propagation characteristics of a propagation path of the multi-code signal, and causing the connecting means to adaptively connect an output of the propagation path estimating section to a plurality of signal demodulating circuit sections a total number of which corresponds to a code number of the multi-code signal.

Furthermore, the present invention provides a base station apparatus for a CDMA mobile communication system, comprising a receiver arrangement in which sync acquisition/ tracking circuit sections and demodulating circuit sections are separately arranged, or the sync acquisition/ tracking circuit sections, propagation path estimating circuits and signal demodulating circuit sections are separately arranged. The operation of this base station comprises a step of receiving a connection request transmitted from a new mobile terminal to the base station, and a step of reducing a multi-code number of the new mobile terminal or other mobile terminal in response to the connection request when a total number of available demodulating circuit sections or available signal demodulating circuit sections in the base station is smaller than a code number of a multi-code signal relating to the connection request, thereby allowing the new mobile terminal to be connected to the base station.

Furthermore, the present invention provides a base station apparatus for a CDMA mobile communication system, comprising a receiver arrangement in which sync acquisition/ tracking circuit sections and demodulating circuit sections are separately arranged, or the sync acquisition/ tracking circuit sections, propagation path estimating circuits and signal demodulating circuit sections are separately arranged. This base station further comprises a means for connecting the demodulating circuit sections not used for communication to the sync acquisition/ tracking circuit sections, or connecting the signal demodulating circuit sections not used for communication to the sync acquisition/ tracking circuit sections, thereby flexibly responding to a change of a multi-code number.

Moreover, the present invention provides a base station apparatus for a CDMA mobile communication system, comprising a transmitter arrangement in which sync signal inserting circuit sections and signal modulating circuit sections are separately arranged, wherein a multi-code signal is transmitted by using one of the sync signal inserting circuit sections and a plurality of signal modulating circuit sections connected to the above one of the sync signal inserting circuit sections.

Furthermore, in view of the foregoing problems in the prior art, the present invention has an object to provide a CDMA mobile communication system which is capable of suppressing interference of a mobile terminal having a high information transmitting rate with neighboring base stations, and accordingly capable of improving an overall efficiency of the system.

To accomplish this and other related objects, the present invention provides a CDMA mobile communication system using a multi-code signal for performing communication between a base station and mobile terminals having various information transmitting rates, wherein a mobile terminal, when located at a predetermined distant position far from the base station, transmits the multi-code signal with a reduced multi-code number which is smaller than an ordinarily required value, the multi-code number representing the number of multiple codes being simultaneously transmitted by the multi-code signal.

Furthermore, the present invention provides a CDMA mobile communication system using a signal having a variable spreading rate for performing communication between a base station and mobile terminals having various information of different transmitting rates, wherein a mobile terminal, when located at a predetermined distant position far from the base station, transmits the signal with an increased spreading factor which is larger than an ordinarily required value.

Moreover, in each of the above CDMA mobile communication systems, the base station, when transmitting a signal to the mobile terminal located at a predetermined distant position far from the base station, reduces a multi-code number representing the number of multiple codes simultaneously transmitted by the signal or increases the spreading factor of the signal.

Furthermore, the present invention provides a CDMA mobile communication system using a multi-code signal for performing communication between a base station and mobile terminals having various information transmitting rates, wherein a mobile terminal located closely to the base station, when the base station has communication quality higher than a predetermined guaranteed level, transmits the multi-code signal with an increased multi-code number which is larger than an ordinarily required value, the multi-code number representing the number of multiple codes being simultaneously transmitted by the multi-code signal.

Furthermore, the present invention provides a CDMA mobile communication system using a signal having a variable spreading factor for performing communication between a base station and mobile terminals having various information transmitting rates, wherein a mobile terminal located closely to the base station, when the base station has communication quality higher than a predetermined guaranteed level, transmits the signal with a reduced spreading factor which is smaller than an ordinarily required value.

Moreover, in each of the above CDMA mobile communication systems, the base station, when having communication quality higher than a predetermined guaranteed level, increases a multi-code number representing the number of multiple codes simultaneously transmitted by the signal or decreases the spreading factor of the signal in transmitting a signal to the mobile terminal located closely to the base station.

Furthermore, the present invention provides a CDMA mobile communication system using a multi-code signal or a variable spreading rate signal for performing communication between a base station and mobile terminals having various information transmitting rates, wherein acceptance of a connection request from a mobile terminal having a high information transmitting rate is restrained when the communication quality is worsened in some of neighboring base stations.

Furthermore, the present invention provides a CDMA mobile communication system using a multi-code signal or a variable spreading factor signal for performing communication between a base station and mobile terminals having various information transmitting rates, wherein a transmission rate of a signal sent form or to a mobile terminal having a high information transmitting rate is decreased when the communication quality is worsened in some of neighboring base stations.

Moreover, in view of the above-described problems of the prior art, the present invention has an object to provide a CDMA communication system realizing a variable rate transmission by using a multi-code signal. Furthermore, the present invention has an object to provide a CDMA communication system which is capable of flexibly responding to a large change of the multi-code number. Furthermore, the present invention has an object to provide a CDMA communication system which is capable of reducing an interference amount.

To accomplish this and other related objects, the present invention provides a CDMA communication system using a multi-code signal for performing communication between a base station and mobile terminals having various information transmitting rates, wherein the mobile terminal puts a priority to each code of the multi-code signal, and the base station determines allocation of receiving devices in accordance with the priority of each code when the base station receives the multi-code signal.

Furthermore, the present invention provides a CDMA communication system using a multi-code signal for performing communication between a base station and mobile terminals having various information transmitting rates, wherein the base station puts a priority to each code of a multi-code signal to be transmitted, and determines allocation of transmitting devices thereof in accordance with the priority of each code when the base station transmits the multi-code signal.

Furthermore, the present invention provides a CDMA communication system using a multi-code signal for transmitting various information signals of different transmitting rates, wherein a transmitter apparatus puts a priority to each code of the multi-code signal, and determines a transmission power of each code in accordance with the priority when the transmitter apparatus transmits the multi-code signal.

### BRIEF DESCRIPTION OF THE DRAWINGS

The above and other objects, features and advantages of the present invention will become more apparent from the following detailed description which is to be read in conjunction with the accompanying drawings, in which:
Fig. 1 is a block diagram showing a receiver arrangement of a CDMA base station in accordance with a preferred embodiment of the present invention;
Fig. 2 is a block diagram showing a receiver arrangement of a CDMA base station apparatus in accordance another preferred embodiment of the present invention;
Fig. 3 is a block diagram showing a receiver arrangement of a CDMA base station apparatus in accordance another preferred embodiment of the present invention;
Fig. 4 is a block diagram showing a receiver arrangement of a CDMA base station apparatus in accordance another preferred embodiment of the present invention;
Fig. 5 is a flowchart showing an operation of the CDMA base station apparatus in accordance with a preferred embodiment the present invention;
Fig. 6 is a block diagram showing a transmitter arrangement of a CDMA base station apparatus in accordance with another preferred embodiment of the present invention;
Figs. 7A and 7B are views illustrating transmission of a voice signal;
Figs. 8A and 8B are views illustrating transmission of a multi-code signal;
Fig. 9 is a block diagram showing a receiver arrangement of a conventional CDMA base station apparatus;
Fig. 10A is a block diagram showing an arrangement of a conventional receiver;
Fig. 10B is a block diagram showing an arrangement of a conventional sync circuit;
Fig. 10C is a block diagram showing an arrangement of a conventional finger;
Fig. 11 is a block diagram showing a transmitter arrangement of a conventional CDMA base station apparatus;
Fig. 12 is a block diagram showing a schematic arrangement of a CDMA mobile communication system in accordance with a preferred embodiment of the present invention;
Fig. 13 is a block diagram showing a schematic arrangement of a CDMA mobile communication system in accordance with another preferred embodiment of the present invention;
Fig. 14 is a view showing an example of cell formation in accordance with an embodiment of the present invention;
Figs. 15A and 15B are views cooperatively showing an example explaining reduction of the information transmitting rate of a mobile terminal in accordance with a preferred embodiment of the present invention;
Figs. 16A, 16B and 16C are views cooperatively showing an example of variable spreading rate transmission in accordance with an embodiment of the present invention;
Fig. 17 is a view showing an example of divided regions in a cell of a base station in accordance with an embodiment of the present invention;
Fig. 18 is a block diagram showing a schematic arrangement of a CDMA mobile communication system in accordance with another preferred embodiment of the present invention;
Fig. 19 is a block diagram showing a schematic arrangement of a CDMA mobile communication system in accordance with another preferred embodiment of the present invention;
Fig. 20 is a view showing concept of a conventional transmission power control;
Fig. 21 is a view showing a conventional communication system;
Fig. 22 is a block diagram showing a schematic arrangement for a mobile terminal of a CDMA communication system in accordance with a preferred embodiment of the present invention;
Fig. 23 is a view showing a multi-code signal used in an embodiment of the present invention;
Fig. 24 is a view showing a multi-code signal used in another embodiment of the present invention;
Fig. 25 is a block diagram showing a receiver arrangement employed in a base station in accordance with another embodiment of the present invention;
Fig. 26 is a block diagram showing a receiver arrangement employed in a base station in accordance with another embodiment of the present invention;
Fig. 27 is a block diagram showing a transmitter arrangement employed in a base station in accordance with another embodiment of the present invention; and
Fig. 28 is a block diagram showing a transmitter arrangement employed in a base station in accordance with another embodiment of the present invention.

### DESCRIPTION OF THE PREFERRED EMBODIMENTS

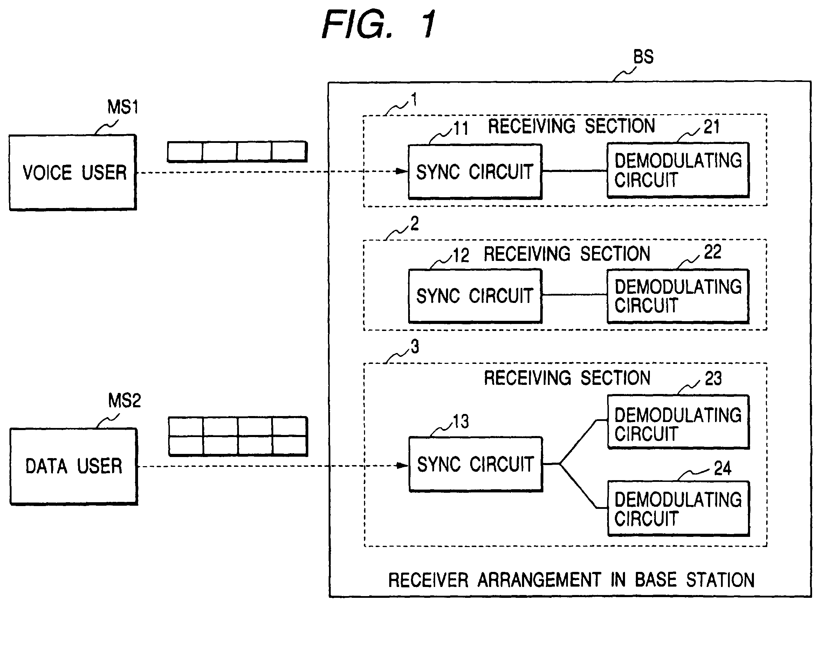

Fig. 1 shows a receiver arrangement of a CDMA base station in accordance with a first embodiment of the present invention.

The receiver arrangement of this CDMA base station BS comprises a plurality of receiving sections 1 to 3. Like the receiver shown in Figs. 10A to 10C, each receiving section comprises a sync acquisition/ tracking circuit section (i.e., a sync circuit section) and a demodulating circuit section. However, the receiving sections of the CDMA base station BS are different from the receivers shown in Fig. 9 in that the sync circuit sections and the demodulating circuit sections are separately arranged and each receiving section is arranged by combining a single sync circuit section and one or more demodulating circuit sections. More specifically, in Fig. 1, the receiving section 1 consists of only one sync circuit 11 and only one demodulating circuit 21. The receiving section 2 consists of only one sync circuit 12 and only one demodulating circuit 22. In other words, the only one demodulating circuit is allocated to the sync circuit in each of the receiving sections 1 and 2. The receiving section 3 consists of only one sync circuit 13 and two demodulating circuits 23 and 24. In other words, a plurality of demodulating circuits are allocated to the sync circuit in the receiving section 3. The number of required sync acquisition/ tracking circuits, the number of required demodulating circuits, and the combination patterns of the sync acquisition/ tracking circuits and the demodulating circuits should be determined considering various factors, such as the number of estimated mobile terminals, a system allowance number depending on an interference amount, the percentage of mobile terminals implementing the multi-code transmission, and the multi-code number.

The receiver arrangement of the above-described CDMA base station BS in accordance with the preferred embodiment of the present invention demodulates a voice signal of a mobile terminal MS1 (i.e., a voice user) by using the receiving section 1 consisting of only one sync acquisition/ tracking circuit 11 and only one demodulating circuit 21. Furthermore, this CDMA base station BS demodulates a 2-multicode signal (i.e., a multi-code signal having a code number of 2) of a mobile terminal MS2 (i.e., a data user) by using the receiving section 3 consisting of only one sync acquisition/ tracking circuit 13 and two demodulating circuits 23 and 24. It is needless to say that the receiving section 3 can be used to demodulate the voice signal of the mobile terminal MS1 (i.e., voice user). Such a receiver arrangement of this embodiment makes it possible to reduce the required number of sync acquisition/ tracking circuits.

Usually, the sync acquisition/ tracking circuits 11 to 13 can acquisition two to four signals arriving via different propagation paths. The sync acquisition/ tracking circuits 11 to 13 send sync information of the reception signals to the demodulating circuits 21 to 24. The same sync acquisition/ tracking circuit is commonly used for multiple code signals as these multiple code signals are transmitted via the same propagation path. The same propagation path information is sent to each demodulating circuit. Each demodulating circuit performs a despreading for each code signal arriving via this propagation path based on the received sync information, thereby demodulating each code signal.

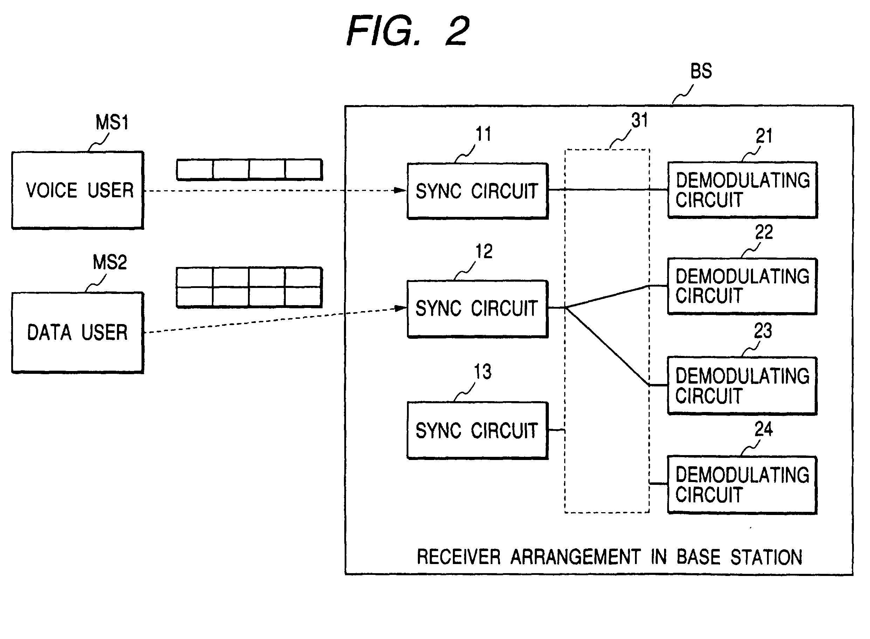

Fig. 2 shows a receiver arrangement of a CDMA base station in accordance with another embodiment of the present invention. The arrangement of Fig. 2 is identical with that of Fig. 1 in that the sync acquisition/ tracking circuits 11 to 13 and the demodulating circuits 21 to 24 are separately provided. This embodiment is however characteristic in that each of the sync acquisition/ tracking circuits 11 to 13 is adaptively connectable to an arbitrary one of the demodulating circuits 21 to 24 via a switch section 31. This arrangement allows each of the sync acquisition/ tracking circuits 11 to 13 to flexibly find and use an available demodulating circuit among the demodulating circuits 21 to 24. The switch section 31 is realized by a software having a switching function for connecting each output of the sync acquisition/ tracking circuits 11 to 13 to any one of the demodulating circuits 21 to 24. For example, it is preferable to arrange each of the demodulating circuits 21 to 24 to receive an output of an arbitrary one of the sync acquisition/ tracking circuits 11 to 13 in accordance with an instruction of the software.

According to this arrangement, the base station BS can receive a connection request of a 4-multicode signal (i.e., a multi-code signal having a multi-code number of 4) when one sync acquisition/ tracking circuit and a total of four demodulating circuits are available. Thus, the arrangement of this embodiment makes it possible to flexibly receive various multi-code signals having different transmission rates, and accordingly makes it possible to effectively use the sync acquisition/ tracking circuits and the demodulating circuits.

Furthermore, when image data is transmitted by changing the transmission rate, the multi-code number may vary during the communication. In this case, the base station BS controls the switch section 31 to supply an output of a sync acquisition/ tracking circuit to a plurality of available demodulating circuits a total number of which is identical with the changed multi-code number. With this switching control, the base station can perform the variable rate transmission in which the multi-code number is changed.

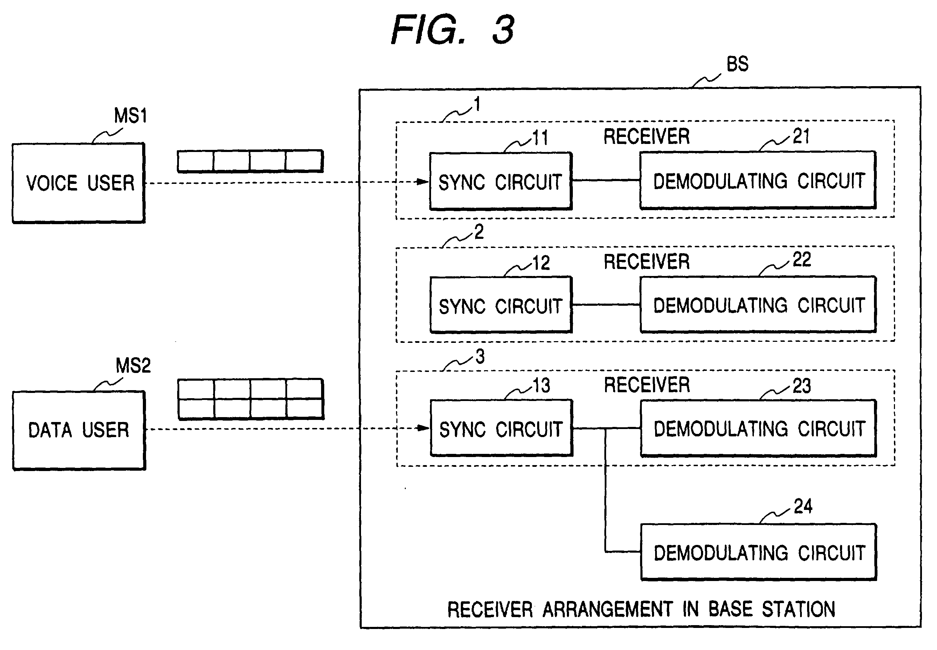

Fig. 3 shows a receiver arrangement of a CDMA base station in accordance with another embodiment of the present invention. This embodiment intends to provide an arrangement capable of flexibly allowing an expansion of the system. This embodiment makes it possible to flexibly demodulate a multi-code signal by providing one or more additional demodulating circuits 24 connectable to one receiver in a base station BS which comprises a plurality of receivers as shown in Fig. 9. The number of additional demodulating circuits 24 to be added is smaller by one than the multi-code number of a predicted multi-code signal. Only one sync acquisition/ tracking circuit is used for receiving a multi-code signal. Thus, this embodiment makes it possible to effectively re-use or modify an existing system.

Like the previously-described embodiments, this embodiment allows the base station to perform the variable rate transmission by selectively connecting the added demodulating circuits to the sync acquisition/ tracking circuit in response to a change of the multi-code number during the communication.

As explained with reference to Figs. 10A to 10C, each demodulating circuit comprises a propagation path estimating section, a correlation arithmetic processing section, a signal correcting section, a combining/demodulating section, and a signal processing section. The propagation path estimating section estimates propagation loss and signal phase in this propagation path based on the sync information transmitted from the sync acquisition/ tracking circuit. The correlation arithmetic processing section performs a despreading for each signal. The signal correcting section corrects the delay time and phase of an obtained correlation value. The combining/demodulating section sums corrected signals and judges the information of the signal. The signal processing section performs error correction processing. As shown in Fig. 10C, the propagation path estimating section performs a common operation for each of code signals. Accordingly, only one propagation path estimating section is necessary for one multi-code signal.

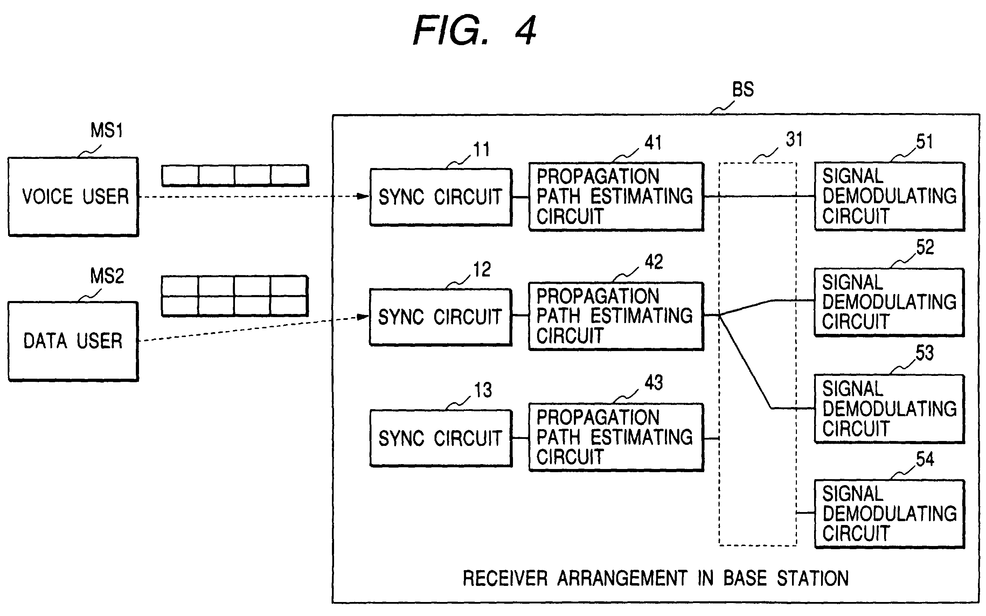

In view of the above, Fig. 4 shows a receiver arrangement of a CDMA base station in accordance with another embodiment of the present invention. The CDMA base station BS of this embodiment includes one propagation path estimating circuit allocated to one sync acquisition/ tracking circuit. As shown in Fig. 4, a propagation path estimating circuit 41 is dedicatedly connected to the sync acquisition/ tracking circuit 11. A propagation path estimating circuit 42 is dedicatedly connected to the sync acquisition/ tracking circuit 12. A propagation path estimating circuit 43 is dedicatedly connected to the sync acquisition/ tracking circuit 13. Output terminals of the propagation path estimating circuits 41 to 43 are connected to the switch section 31. Each of the propagation path estimating circuits 41 to 43 is a circuit having the same function as that of the propagation path estimating section 125 in each finger shown in Fig. 10C. More specifically, each of the propagation path estimating circuits 41 to 43 includes a sync signal spreading code generator, a correlator, and a propagation path estimating circuit section, exclusively provided for the sync timing signal of a propagation path sent from a corresponding one of the sync circuits 11 to 13. Thus, the switch section 31 receives a reception signal, each sync timing signal of the sync circuits 11 to 13, and propagation characteristics of the reception signal arriving through each propagation path which is sent from a propagation path estimating processing section in each finger.

The switch section 31 has a plurality of output terminals connected to a plurality of signal demodulating circuits 51 to 54. The signal demodulating circuits 51 to 54 have the same functions as those of the signal demodulating circuit 126 in each finger, the combining/demodulating unit 123, and the signal processing section 124. For example, the signal demodulating circuit 52 shown in Fig. 4 comprises signal demodulating circuit sections (i.e., an information signal spreading code generator, a correlator, and a phase correcting circuit) corresponding to data user signals spread by using code "1" and arriving via respective propagation paths, a combining/ demodulation unit for combining the outputs of the signal demodulating circuit sections corresponding to respective propagation paths by adjusting timings and then demodulating the combined signals, and a signal processing section.

In this manner, demodulating a multi-code signal requires one sync acquisition/ tracking circuit and one propagation path estimating circuit, and a plurality of signal demodulating circuits corresponding to the multi-code number. It becomes possible to reduce the facility cost.

Like the previously-described embodiments, this embodiment allows the base station to perform the variable rate transmission by appropriately supplying an output of the propagation path estimating circuit to any available signal demodulating circuit in response to a change of the multi-code number during the communication.

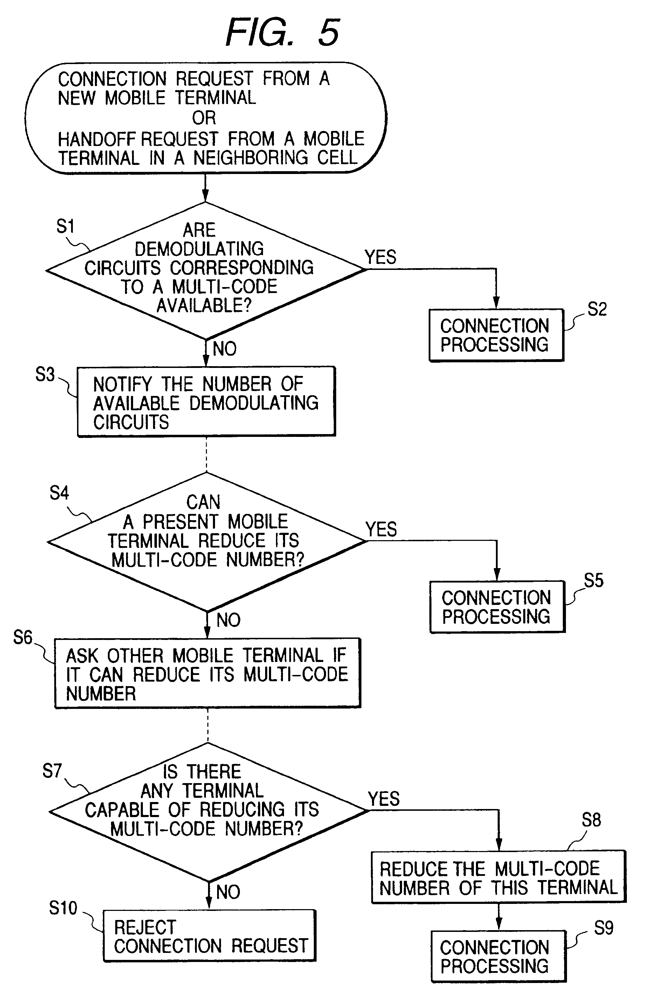

As explained above, using the receiving arrangement for a base station of the present invention makes it possible to reduce the possibility that a new connection request is reject or a handoff request from a neighboring cell is rejected. Fig. 5 is a flowchart showing an operation of the CDMA base station shown in Fig. 2, although it is applicable to any other CDMA base station shown in Fig. 1, 3, or 4.

It is now assumed that a connection request is generated from a new mobile terminal in any cell, or a handoff request is generated from a mobile terminal in a neighboring cell, and in this case this request is a multi-code signal and the base station of this cell has an available or unused sync acquisition/ tracking circuit. However, when no available sync acquisition/ tracking circuit remains, the connection request is rejected.

In the above case, the base station of this cell makes a judgement to check whether or not demodulating circuits corresponding to the multi-code number are available (step S1). When there are sufficient number of available demodulating circuits (i.e., when the judgement result is YES in step S1), the control flow proceeds to step S2 to perform the connection processing. When the judgement result is NO, the base station transmits information relating to the number of available demodulating circuits to a mobile terminal generating the connection request (step S3). Based on the transmitted information, the mobile terminal reduces the multi-code number if it is possible. In other words, the mobile terminal reduces a transmission rate. The reduced multi-code number is notified to the base station. In some cases, this mobile terminal may be based on a real-time data transmission. In such cases, it is generally impossible to reduce the multi-code number. Thus, the mobile terminal notifies the base station of its incapability in reducing the multi-code number.

When the base station is notified in step S4 that the mobile terminal can reduce the multi-code number to a value equal to or smaller than the number of currently available demodulating circuits, the control flow proceeds to step S5 to connect this mobile terminal of a reduced multi-code number. On the other hand, when the mobile terminal cannot reduce the multi-code number, the control flow proceeds to step S6. In step S6, the base station asks presently connected other mobile terminals if it is possible to reduce the code number. Then, in step S7, it is checked whether or not any mobile terminal can reduce the code number. When there is any mobile terminal which can reduce the code number (i.e., when the judgement is YES in step S7), the control flow proceeds to step S8 to reduce the multi-code number of this mobile terminal. As a result, the number of available demodulating circuits increases. Thus, the base station can accept the connection request from a new mobile terminal (step S9). On the other hand, when no mobile terminal presently connected to the base station can reduce the code number (i.e., when the judgement is NO in step S7), the control flow proceeds to step S10 to reject the connection request.

As described above, the base station of this embodiment can lower the possibility of rejecting the connection request from a new mobile terminal.

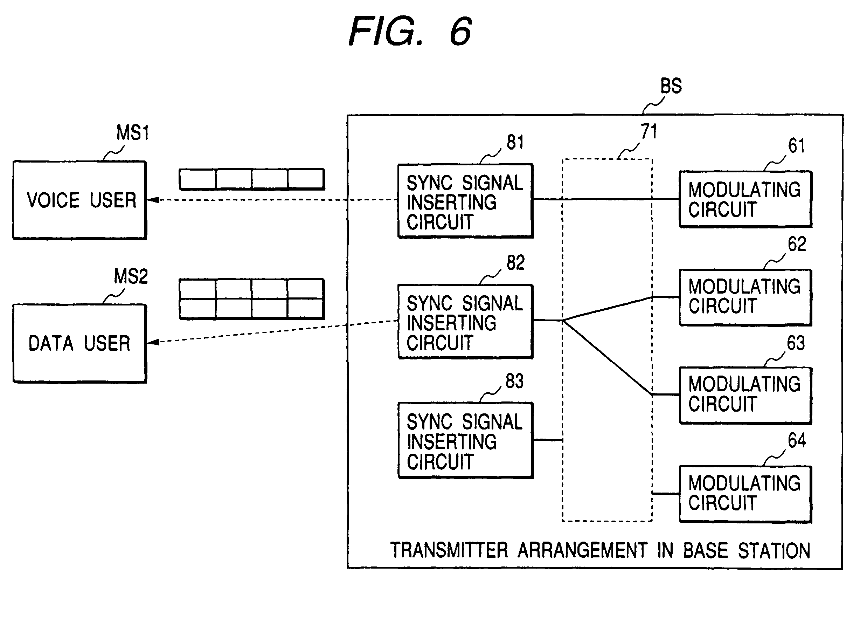

Although the present invention is explained based on the receiver arrangement of a base station, the similar arrangement is applicable to a transmitter arrangement of a base station which will be hereinafter explained with reference to Fig. 6.

In Fig. 6, the transmitter arrangement of a base station BS comprises a plurality of modulating circuits 61 to 64 each implementing a spreading modulation for an information signal. Furthermore, the transmitter arrangement of a base station BS comprises a plurality of sync signal inserting circuits 81 to 83 each inserting a sync signal. The arrangement of Fig. 6 differs from the receivers shown in Fig. 11 in that the modulating circuits 61-64 and the sync signal inserting circuits 81-83 are separately arranged. Furthermore, the transmitter arrangement of the base station BS comprises a switch section 71 which flexibly connects an output of the modulating circuits 61 to 64 to an arbitrarily one of the sync signal inserting circuits 81 to 83.

In this transmitter arrangement of the base station BS, a high-rate information transmitting signal is formed by converting an information signal into a plurality of parallel signals to adjust its transmitting rate to a predetermined high value. Then, the converted parallel signals are sent to the corresponding number of modulating circuits, to produce a multi-code signal. For example, an information signal for a mobile terminal MS2 (i.e., a data user) is supplied to the modulating circuits 62 and 63, in which the information signal is spreading modulated by using a spreading signal. The multi-code signal constituted by the outputs of these plurality of modulating circuits 62 and 63 is supplied to the sync signal inserting circuit 82 via the switch section 71. The sync signal inserting circuit 82 adds a sync signal to the multi-code signal. Thus, the multi-code signal is transmitted to the mobile terminal MS2 of a data user via a high-frequency circuit (not shown).

As described above, this embodiment of the present invention makes it possible to transmit a multi-code signal by using only one sync signal inserting circuit and a plurality of modulating circuit a total number of which corresponds to the multi-code number. Accordingly, it becomes possible to reduce the required number of sync signal inserting circuits in the base station.

Although Fig. 6 shows the arrangement comprising the switch section 71, it is possible to provide a plurality of transmitting sections each consisting of a single sync signal inserting circuit and at lease one modulating circuit, like the receiver arrangement shown in Fig. 1. In this case, an appropriate transmitting section can be selected according to the multi-code number. Alternatively, it is possible to provide a plurality of transmitting sections each consisting of only one sync signal inserting circuit and only one modulating circuit, in addition to at least one additional modulating circuit, like the receiver arrangement shown in Fig. 3. According to this arrangement, the additional modulating circuits whose number is smaller by one than the multi-code number are connected to the selected transmitting section.

As described above, the CDMA base station of the present invention employs the receiver arrangement in which the sync acquisition/ tracking circuit sections and the demodulating circuit sections are separately arranged, or the sync acquisition/ tracking circuit sections and the propagation path estimating sections and the signal demodulating circuit sections are separately arranged. Thus, it becomes possible to reduce the total number of required sync acquisition/ tracking circuit sections as well as the total number of required propagation path estimating sections which are required in demodulating a multi-code signal. The system construction cost can be reduced.

Furthermore, the CDMA base station of the present invention employs the receiver arrangement in which the sync acquisition/ tracking circuit sections and the demodulating circuit sections are adaptively connected, or the propagation path estimating sections and the signal demodulating circuit sections are adaptively connected. Thus, the base station can flexibly receive the connection requests from various mobile terminals having different transmission rates. And also, the base station can perform the variable rate transmission in response to a change of the multi-code number during the communication.

Furthermore, the CDMA base station of the present invention can reduce the multi-code number of a mobile terminal which requests a connection to the base station, or can reduce the multi-code number of a presently connected mobile terminal. Thus, the base station can lower the possibility of rejecting the connection request from a new mobile terminal.

Moreover, the CDMA base station of the present invention employs the transmitter arrangement in which the modulating circuit sections and the sync signal inserting circuits are separately arranged. Thus, it becomes possible to reduce the total number of required sync signal inserting circuits which are required in transmitting a multi-code signal. The cost of the base station can be reduced.

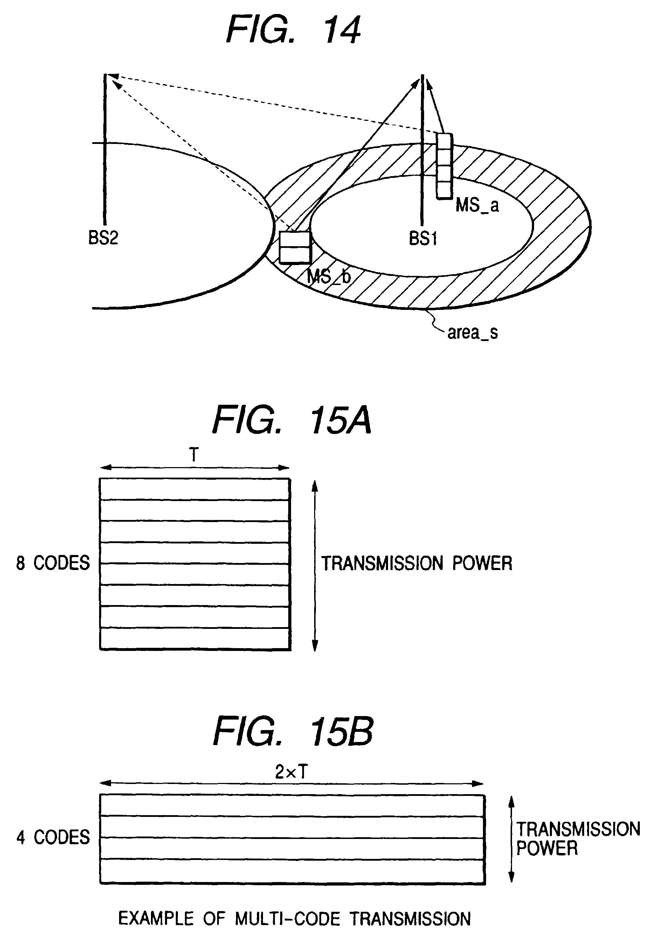

Prior to explanation of other embodiments of the CDMA mobile communication system in accordance with the present invention, a fundamental concept of the present invention will be explained with reference to Fig. 14.

In Fig. 14, BS1 and BS2 are base stations neighboring each other. Both of mobile terminals MS_a and MS_b are multi-code mobile terminals having information transmitting rates corresponding to the multi-code number of 4. More specifically, each of the mobile terminals MS_a and MS_b has the capability of transmitting various transmission information, such as voice information, data information, and image information, which have different information transmitting rates. According to the embodiments of the present invention, the multi-code number of a multi-code signal transmittable by each mobile terminal is 4 at maximum.

Furthermore, each of the mobile terminals MS_a and MS_b is connected to the base station BS1. As shown in the drawing, the mobile terminal MS_a is located closely to the base station BS1. The other mobile terminal MS_b is located in a distant area near a cell boundary of the base station BS1.

As described above, the mobile terminal MS_b located near the cell boundary and relatively close to the neighboring base station BS2 possible causes a large interference with the base station BS2 and deteriorates the communication quality of the base station BS2. Therefore, the mobile terminal MS_b limits the maximum value of the information transmitting rate so that the multi-code number representing the number of multiple codes simultaneously transmitted can be reduced. This makes it possible to suppress the interference between the mobile terminal MS_b and the base station BS2.

In this case, the mobile terminal MS_b needs to decrease the multi-code number. To this end, the mobile terminal MS_b cuts the information having a lower priority so as to decrease the transmission rate. Alternatively, in a case where delayed transmission of information, such as transmission of data, is allowable, the mobile terminal MS_b extends a duration of the communication so that the maximum transmission rate can be restrained.

Figs. 15A and 15B cooperatively show an example explaining reduction of the information transmitting rate in the mobile terminal MS_b which is located at a distant position far from the base station BS1. According to the example shown in Fig. 15A, the mobile terminal MS_b transmits a multi-code signal having a multi-code number of 8 which is an ordinary value. To reduce the information transmitting rate, the mobile terminal MS_b can limit its maximum transmission rate to a level equivalent to the multi-code number of 4, as shown in Fig. 15B. This makes it possible to reduce the transmission power to a ½ level as shown in the drawing.

Accordingly, the maximum transmission rate can be restrained by doubling the duration of the communication without cutting any information.

To reduce the information transmitting rate (e.g., a multi-code number) of a mobile terminal having a high information transmitting rate located near the cell boundary (i.e., in a distant position far from the base station), the later-described embodiments propose some methods. One method is to cause the mobile terminal to spontaneously make a judgement for it, and another method is to cause the base station to notify it to the mobile terminal.

Usually, a mobile terminal receives a control signal which is always transmitted from a base station. The control signal may be referred to as a pilot signal and has a constant transmission power. Thus, the mobile terminal can know its approximate position (i.e., a distance from the base station) based on the power level of the received control signal. Accordingly, setting a threshold for the power level of the received control signal makes it possible to discriminate or identify a region having the power level larger than the threshold from a region having the power level smaller than the threshold. Fig. 14 shows an "area_s" as a region having the power level smaller than the threshold. A mobile terminal located in this "area_s" should be subjected to the above-described restriction in the information transmitting rate.

In the case where the downlink transmission power control is executed, information transmitted from each mobile terminal to the base station includes transmission power information required for causing the base station to control the transmission power of a signal transmitted to this mobile terminal and information indicating communication quality or a power level of the control signal received by the mobile terminal. Therefore, the base station can estimate the position of each mobile terminal based on the information received from this mobile terminal. When the base station detects a mobile terminal existing in the "area_s", it is possible for the base station to instruct this mobile terminal to reduce the information transmitting rate of a signal.

Hereinafter, another embodiments of the present invention will be explained.

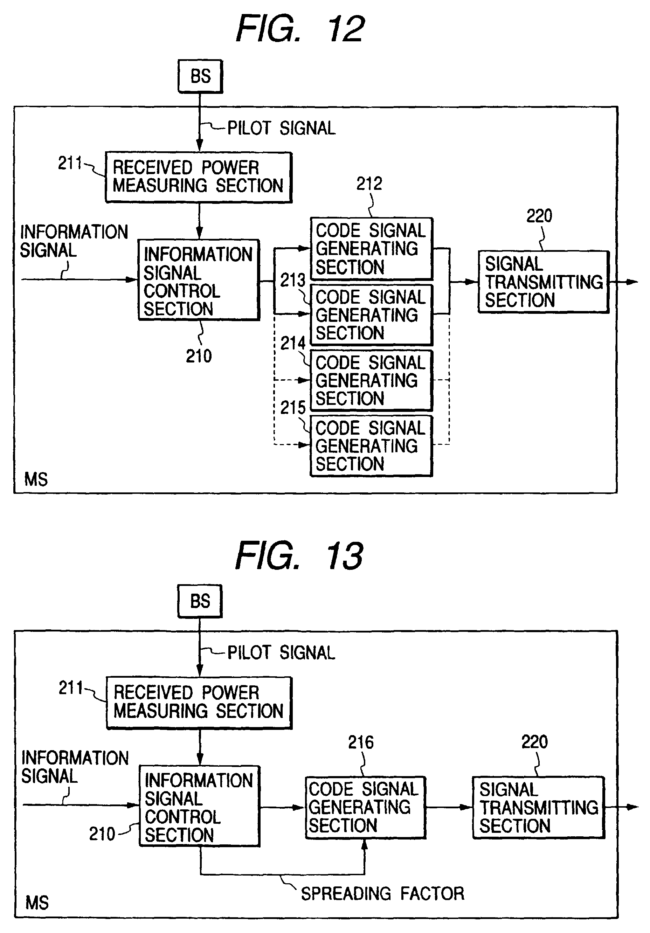

Fig. 12 is a block diagram showing a schematic arrangement of a CDMA mobile communication system in accordance with a preferable embodiment of the present invention.

A mobile terminal MS is connected or to be connected to a base station BS. The mobile terminal MS receives a control signal (i.e., a pilot signal) from this base station BS. A received power measuring section 211 measures a power level of the received control signal. It is however possible to measure the communication quality of the received control signal instead of measuring the power level thereof. In the mobile terminal MS, the power level information of the received control signal measured by the received power measuring section 211 is sent to an information signal control section 210. The information signal control section 210 estimates the present position of the mobile terminal MS (i.e., a distance from the base station BS) based on the power level information of the received control signal. When it is judged that the mobile terminal MS is located near the cell boundary, or when the power level of the received control signal is lower than a predetermined threshold for the received power, the information signal control section 210 reduces the information transmitting amount. In this case, the reduction amount may be a constant value which is determined beforehand or a variable value instructed by the base station in accordance with momentary conditions. Furthermore, in setting a reduction value of the information transmitting amount, it is possible to set a different value for each of mobile terminals with reference to individual difference in the delay allowance amount of transmission information or individual difference in the required communication quality.

The information signal entered into the information signal control section 210 has a transmission rate corresponding to four multi-codes. In other words, an ordinary required multi-code number of this information signal is 4.

In an ordinary condition, i.e., when the power level information of the received control signal reveals that this mobile terminal is not located near the cell boundary, the information signal control section 210 separates the information signal into four signals each having a transmission rate equivalent to 1/4 of the original transmission rate. The separated signals are supplied to code signal generating sections 212 to 215, respectively. The code signal generating sections 212 to 215 spread the entered signals by using different codes. A signal transmitting section 220 receives four code signals generated from the code signal generating sections 212 to 215 and combines them to output as a multi-code signal.

On the other hand, when the mobile terminal is located near the cell boundary, or when the power level of the received control signal is lower than the predetermined threshold for the received power, the information signal control section 210 reduces the multi-code number in accordance with the position of this mobile terminal. More specifically, as shown by a dotted line in Fig. 12, the multi-code number is reduced from 4 to 2. In this case, as a method of reducing the multi-code number, the information signal control section 210 can cut the information of two of four codes and supply the remaining signals to only two code signal generating sections 212 and 213. Alternatively, when a realtime transmission is not so important for the information signal, it is preferable to provide a buffer for temporarily storing the information signal so as to double the duration of the communication as shown in Fig. 15B.

Fig. 13 is a block diagram showing a schematic arrangement of a CDMA mobile communication system in accordance with another embodiment of the present invention. This embodiment is characterized in that the signal spreading factor is changed in accordance with an individual information transmitting rate.

Like the embodiment shown in Fig. 12, the mobile terminal MS identifies its position (i.e., a distance from the base station BS) based on the control signal (i.e., pilot signal) transmitted from the base station BS. Then, with reference to the identified position, the system increases the spreading factor of a transmission signal so as to reduce the transmission rate.

In Fig. 13, the information signal control section 210 determines a spreading factor and notifies the determined spreading factor to a code signal generating section 216. More specifically, the information signal control section 210 receives the power level information of the received control signal from the received power measuring section 211. When the power level of the received control signal is lower than the predetermined threshold for the received power, the information signal control section 210 reduces the maximum information transmitting rate of this mobile terminal MS to a level equivalent to a half of the original rate.

When the information amount is reduced to a half, the spreading factor for transmitting it by using the same frequency band becomes double. Doubling the spreading factor leads to a half cut of the transmission power. Hence, the interference amount of the mobile terminal with a neighboring cell is reduced to a half.

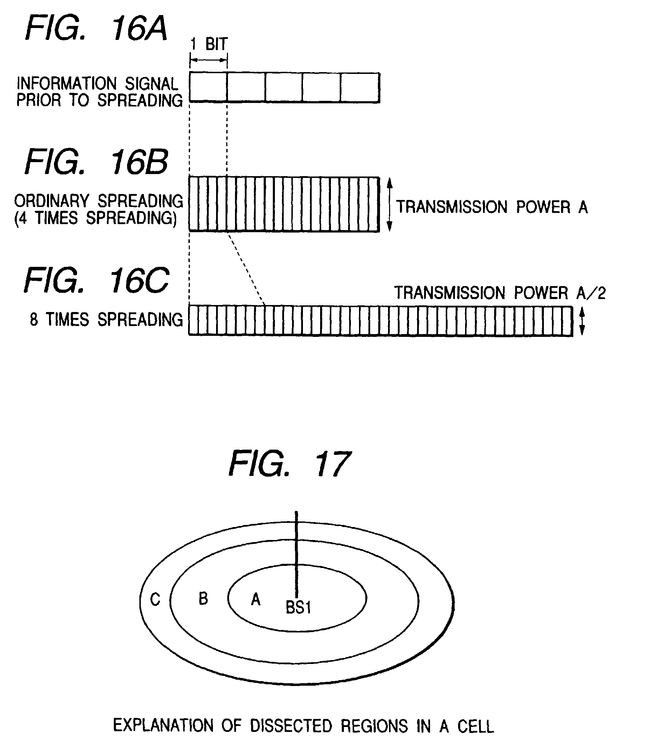

Alternatively, as shown in Figs. 16A, 16B and 16C, it is possible to transmit all of the information by doubling the duration of the communication makes. Fig. 16A shows an information signal prior to the spreading. Fig. 16B shows a transmission signal being spread in an ordinary condition (i.e., four times spreading). Fig. 16C shows a transmission signal being spread with a spreading factor of 2 (i.e., eight times spreading).

According to this embodiment, the system converts the information signal of Fig. 16A into a four-times spreading signal in an ordinary condition. The four-times spreading signal is transmitted by a transmission power "A" as shown in Fig. 16B. However, when the mobile terminal is located at a distant point far from the base station, the system changes the spreading factor to a larger value equivalent to twice the ordinary level as shown in Fig. 16C. In this case, to transmit the signal on a same frequency band, the spreading signal shown in Fig. 16C needs to have the same cycle as that of the spreading signal shown in Fig. 16B. As a result, the time required for transmitting a same information amount is doubled, meanwhile the transmission power is reduced to a half.

The above-described embodiment is based on a case where only one threshold is used to identify a mobile terminal located in a specific distant area "area_s" where the power level of the received control signal is lower than the threshold. However, it is possible to provide a plurality of thresholds for discriminating the power level of a control signal transmitted from a base station. For example, by using two thresholds, the cell region of the base station BS1 can be dissected into three regions "A", "B" and "C" as shown in Fig. 17.

Under the uplink transmission power control, the base station BS1 receives a signal of same power from each mobile terminal existing in any of the three regions "A", "B" and "C." Each mobile terminal causes an interference with a neighboring base station. However, the interference amount varies in accordance with the position of each mobile terminal. In the above-described transmission rate control, it is supposed that the mobile terminal is located in the region "C" near the cell boundary. When a mobile terminal is located in the region "A" near the base station, an interference amount caused between this mobile terminal and a neighboring base station BS2 is small. Therefore, it is believed that increasing the multi-code number of a signal transmitted from a terminal in the region "A" does not deteriorate the communication quality of the neighboring base station BS2.

In view of the above, when the communication quality of the base station BS1 is higher than the predetermined guaranteed level, a mobile terminal existing in the vicinity of the base station (i.e., a mobile terminal in the region "A" in Fig. 17) can increase the multi-code number. In other words, the number of multiple codes simultaneously transmitted by this mobile terminal can be increased. This makes it possible to increase the maximum transmission amount and reduce the duration of the communication. As a result, the base station BS1 can quickly response to a connection request from a new terminal.

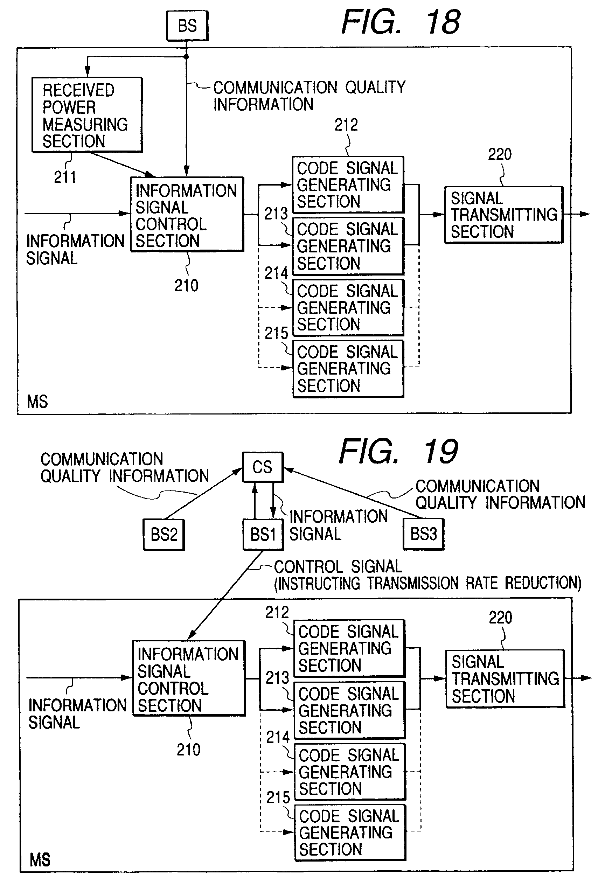

Fig. 18 is a block diagram showing a schematic arrangement of a CDMA mobile communication system in accordance with another embodiment of the present invention.

This embodiment is characterized in that the base station BS notifies each mobile terminal MS of the communication quality information as a target level to be satisfied by a signal received by the base station BS. Each mobile terminal MS comprises the received power measuring section 211 which measures a power level of the received control signal, and the information signal control section 210 which receives the communication quality information notified from the base station BS as well as the power level information of the received control signal sent from the received power measuring section 211. The information signal control section 210 identifies the position of this mobile terminal, for example, based on the comparison between the power level information of the received control signal and the above-described threshold for the received power. When the position of this mobile terminal is in the region close to the base station BS, the information signal control section 210 compares the present communication quality information notified from the base station with a predetermined guaranteed level of the communication quality of this system. When the present communication quality information notified from the base station is larger than the predetermined guaranteed level the communication quality of this system by a predetermined value, the information signal control section 210 increases the transmission rate of the information signal. For example, it is now assumed that two code signal generating sections 212 and 213 are used to transmits a multi-code signal having a multi-code number 2. If required to increase the multi-code number to 4, the input information signal is divided into four signals and supplied to the code signal generating sections 212 to 215, respectively. The signal transmitting section 220 receives all of the code signals produced from the code signal generating sections 212 to 215 and combines them to output a multi-code signal of a multi-code number 4.

With this arrangement, the transmission power of a signal transmitted from the mobile terminal MS is doubled. This will significantly worsen the communication quality of the base station BS. However, as described above, the present communication quality of the base station BS is fairly better than the guaranteed level. Thus, the base station can absorb adverse influence caused by the transmission power increase of the mobile terminal MS. Furthermore, the mobile terminal MS located in the vicinity of the engaged base station BS gives less influence to a neighboring base station, as it is located relatively far from the neighboring base station. Moreover, as the mobile terminal MS can increase its information transmitting rate, the substantial time required for accomplishing a transmission operation can be shortened. Thus, the base station BS can promptly accept a new connection request from another mobile terminal. As a result, an overall efficiency of the system can be improved.

The above-described method is explained based on a transmission system using a multi-code signal. However, it is possible to employ this method in a transmission system using a variable spreading factor. In this case, a mobile terminal existing in the vicinity of the base station uses a small spreading factor for transmitting a signal. Using a small spreading factor shortens the duration of the communication, although the signal transmission power is increased. As a result, as described above, the overall efficiency of the system can be improved.

Although the above-described embodiments are chiefly explained based on the uplink transmission control, it is possible to employ a similar system for the downlink transmission control.

When the downlink transmission amount increases, the base station increases an overall transmission power to maintain satisfactory communication quality (i.e., to maintain a satisfactory power of a signal received by each mobile terminal). When a mobile terminal is located near the cell boundary, the base station allocates a large transmission power for a signal transmitted to this terminal so as to maintain the communication quality of this terminal. Such an increase of total transmission power in the base station tends to enlarge an interference between the mobile terminal and a neighboring cell.

Accordingly, to suppress the increase of total transmission power, the base station reduces a signal transmission rate by reducing the multi-code number or by increasing the spreading factor of a signal transmitted to the mobile terminal located near the cell boundary.

Furthermore, when the downlink communication quality is maintained well, the base station increases the transmission rate by increasing the multi-code number or by decreasing the spreading factor of a signal transmitted to a mobile terminal in a region close to the base station. With this control, like the previously-described case, it becomes possible to substantially shorten the transmission time for this mobile terminal. The overall efficiency of the system can be improved.

The distance from the base station to a mobile terminal can be known based on a transmission power of a signal transmitted to the mobile terminal.

The above-described systems are based on an independent control of individual base station. An embodiment explained hereinafter is a CDMA mobile communication system of the present invention in which the transmission control is performed based on the communication quality information given from neighboring base stations.

Fig. 19 is a block diagram showing a schematic arrangement of the CDMA mobile communication system in accordance with this embodiment. In this drawing, BS1 to BS3 represent neighboring base stations. CS represents a control station which administrates the base stations BS1 to BS3. MS represents a mobile terminal having a high information transmitting rate.

As shown in the drawing, each of the base stations BS1 to BS3 notifies the control station CS of its own communication quality information.

It is now assumed that the communication quality is already deteriorated or likely to be deteriorated in at least one of the base stations BS2 and BS3 neighboring the base station BS1.

Under this condition, a mobile terminal having a high information transmitting rate generates a connection request in the cell of the base station BS1. The control station CS instructs the base station BS1 to reject the connection request of this terminal by the reason that an interference signal caused by this terminal further worsens the communication quality of the neighboring base stations BS2 and BS3. As a method of rejecting the connection request, the base station BS1 can automatically reject all connection requests of mobile terminals generated in the cell of the base station BS1. Alternatively, the base station can accept or reject each connection request with reference to the position or the transmission rate of each mobile terminal. For example, in a case where the mobile terminal transmits the power information of the control signal received from a base station or the communication quality information together with the connection request, it is possible to estimate the position of this terminal.

When the base stations BS1 to BS3 are equipped with sector antennas or the like, the base stations BS1 to BS3 can estimate an approximate azimuth of each mobile terminal. Such azimuth information can be also used in estimating the position of each mobile terminal. For example, a mobile terminal located near the cell boundary adjacent to the cell of the neighboring base station BS3 may generate a connection request. In such a case, the base station BS3 transmits a control signal to the base station BS1. The control signal notifies the base station BS1 of accepting the request when the communication quality of the base station BS3 is good or rejecting the request when the communication quality is bad.

In the above-described case, the connection request from a mobile terminal is substantially restrained. However, it is possible for the control station CS to reduce the transmission rate of a mobile terminal connected to the base station BS1 or the transmission rate of a signal transmitted to this mobile terminal by the reason that the communication quality is already deteriorated or likely to be deteriorated in all or at least part of the base stations BS2 and BS3 neighboring the base station BS1.

More specifically, it is now assumed that the communication quality is already deteriorated or likely to be deteriorated in all or at least part of the base stations BS2 and BS3 neighboring the base station BS1. In this case, as shown in Fig. 19, the control station CS notifies the base station BS1 of the control information. In response to this control information, the base station BS1 instructs an engaged mobile terminal MS having a high information transmitting rate to reduce the transmission rate. As described above, to reduce the transmission rate, the information signal control section 210 in the mobile terminal MS reduces the multi-code number or enlarges the spreading factor. Alternatively, it is possible that the base station BS1 reduces the information transmitting rate of a signal sent to the mobile terminal MS.

Furthermore, when the communication quality is worsened in a neighboring base station, it is also possible for this base station to request a trouble-making base station to reduce the transmission rate through the control station CS. For example, when the communication quality of the neighboring base station BS3 is deteriorated, the base station BS3 analyzes a signal having a large interference power. The analysis result may reveal that a mobile terminal existing in the cell of the base station BS1 causes a large interference with the base station BS3. In such a case, the base station BS3 transmits a control signal to the base station BS1. The control signal instructs the base station BS1 to reduce the transmission rate of its engaging mobile terminal.

As described above, the present invention can effectively suppress interference with a neighboring base station by restricting the maximum information transmitting rate. Thus, the overall efficiency of the system is improved.

A receiver arrangement employed in a CDMA communication system of the present invention will be explained, hereinafter.

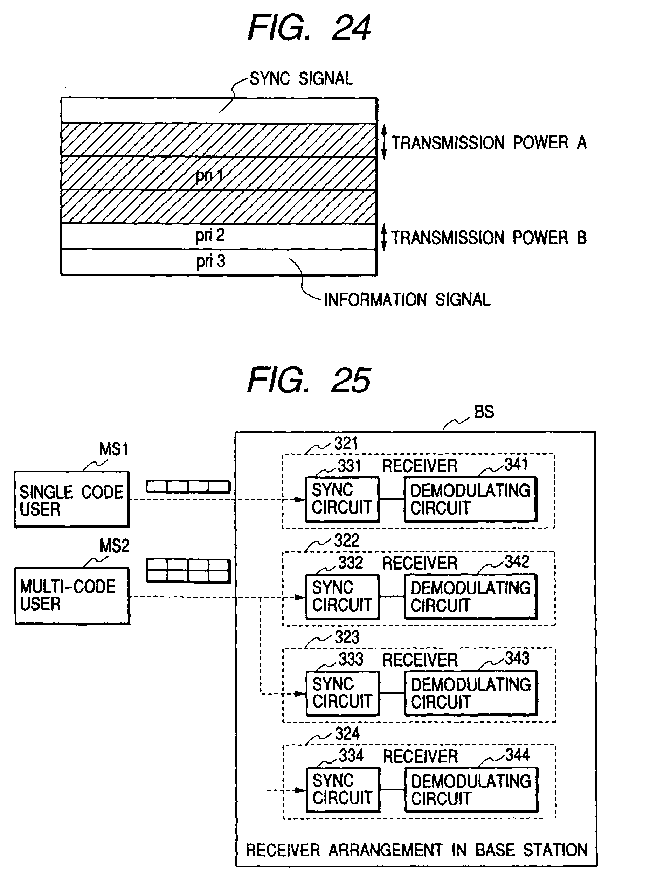

Fig. 25 is a block diagram showing an uplink receiver arrangement employed in a base station which uses a multi-code signal to realize a variable rate transmission.

As shown in the drawing, the base station BS comprises a plurality of receivers 321 to 324 each corresponding to one code. Accordingly, two receivers are required for receiving a 2-multicode signal (i.e., a multi-code signal having a multi-code number of 2). When the multi-code number increases during the communication, the number of receivers required for receiving the multi-code signal increases. Each of the receiver receivers 321 to 324 consists of a single sync circuit (331-334) and a single demodulating circuit (341-344). Although not shown in the drawing, each receiver includes a signal processing circuit which is practically required to reconstruct an interleaved or error-corrected signal. Each of the sync circuits 331 to 334 implements sync acquisition/ tracking of a received signal for each chip of a spreading code. Each of the demodulating circuits 341 to 344 receives an output of a corresponding sync circuit, and despreads and demodulates the received signal. Each demodulating circuit performs an RAKE operation which is peculiar to the CDMA system.

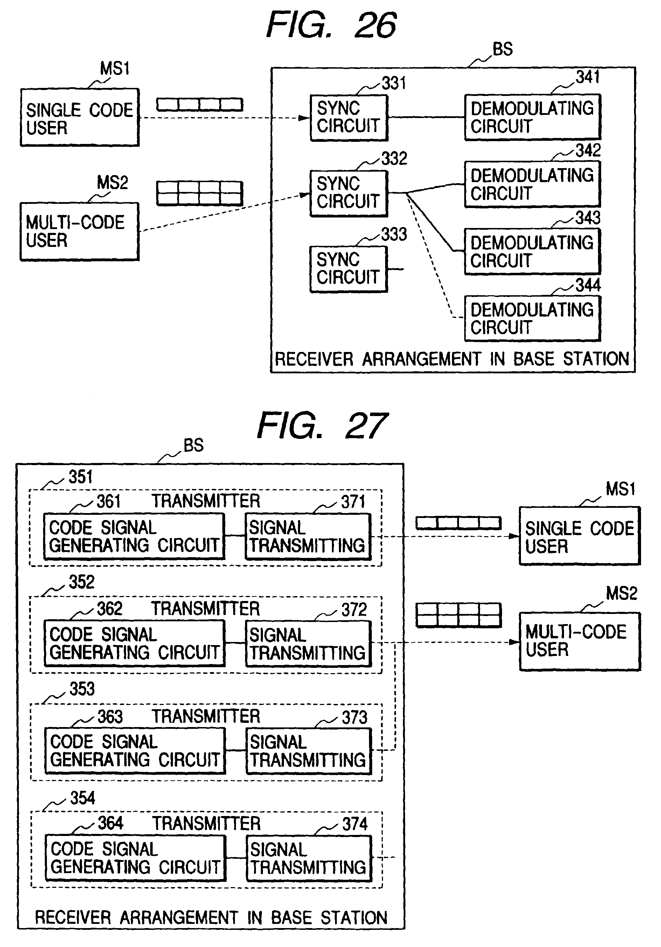

Fig. 26 is a block diagram showing another receiver arrangement employed in a base station in accordance with the present invention. As shown in the drawing, the sync circuits 331 to 333 and the demodulating circuits 341 to 344 are separately arranged. A multi-code signal is processed by using one sync circuit and a plurality of demodulating circuits corresponding to a multi-code number of this multi-code signal. For example, the base station receives a 2-multicode signal (i.e., a multi-code signal having a multi-code number 2) from a multi-code user MS2. In this case, the base station BS uses the sync circuit 332 to implement the sync acquisition/ tracking for the multi-code signal having a multi-code number 2. An output of the sync circuit 332 is supplied to demodulating circuits 342 and 343. Each of the demodulating circuits 342 and 343 despreads and demodulates a corresponding code signal. It is now assumed that the multi-code number increases to 3 from 2 during the communication. In this case, as indicated by a dotted line, the base station BS supplies the output of the sync circuit 332 to a demodulating circuit 344 in addition to the demodulating circuits 342 and 343. Thus, to demodulate a 3-multicode signal (i.e., multi-code signal having a multi-code number of 3), the base station BS uses a total of three demodulating circuits 342 to 344.

As described above, the number of receivers shown in Fig. 25 is finite and the number of demodulating circuits shown in Fig. 26 is finite too.

Hereinafter, the receiver arrangement of Fig. 26 will be explained.

As described above, the multi-code number may suddenly vary in the variable rate transmission, and it is therefore predicted that the base station may not be able to allocate a sufficient number of demodulating circuits in response to such sudden increase of the multi-code number. In such a case, it is impossible to demodulate a code signal when no demodulation circuit is allocated to this code signal. Thus, this code signal is eliminated. If the eliminated code signal contains important information, the receiver side will incur large damage.

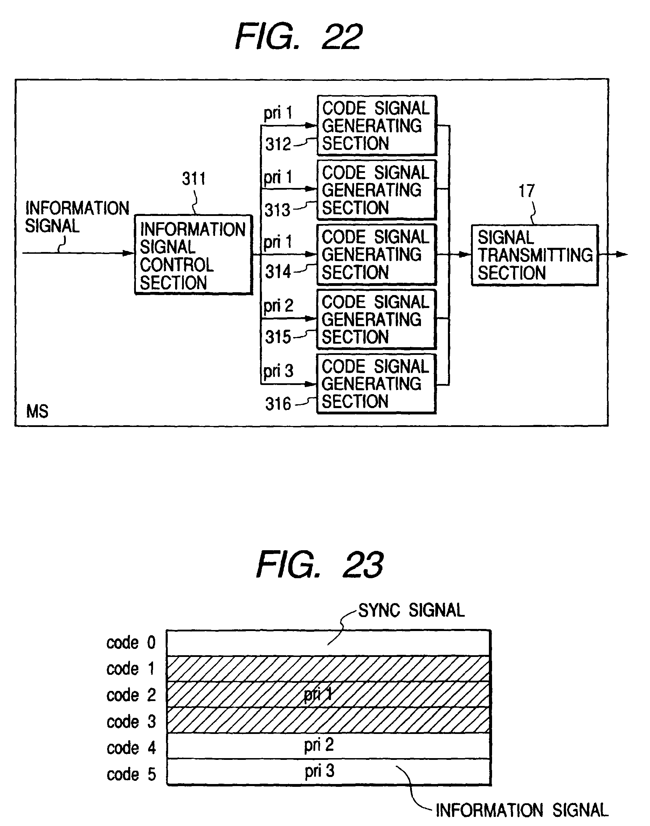

In view of the above, the present invention intends to surely transmit important information so as not to be lost during the communication. More specifically, as shown in Fig. 23, at a transmitter side, priorities "pri 1" to "pri n" are put to respective codes in accordance with the importance of each information. According to this embodiment, "pri 1" has the highest priority. The priorities of "pri 2" and "pri 3" follow "pri 1" in this order.

For example, music information contains important information in its low-frequency portion. A high-frequency portion chiefly relates to sound quality. Thus, cutting the high-frequency portion possibly deteriorates the sound quality. In this case, it is however possible to transmit fundamental information of sounds. Hence, it is preferable to put "pri 1" to the low-frequency portion and put "pri 2" and "pri 3" to the high-frequency portion. The information contained in the high-frequency portion varies as time elapses. Thus, the variable rate transmission is applied to this portion. More specifically, when the music information contains less high-frequency portion, an information signal of "pri 3" being spread by using a code 5 is not transmitted.

For example, it is now supposed that transmission of a mobile terminal has been performed by using a multi-code signal containing a total of four codes, i.e., code 1 to code 4. However, the high-frequency portion of the information signal increases occasionally. To respond to such an increase, the mobile terminal increases the code number so that the mobile terminal can transmit a multi-code signal having a multi-code number of 5.

In this case, the base station may not have a sufficient number of demodulating circuits for the multi-code signal having an increased multi-code number. In other words, the base station cannot accept the increase of the multi-code number. Furthermore, the base station may receive a request equivalent to increasing of four codes, whereas the number of available demodulation circuits is only two. In such a case, these available demodulation circuits are allocated to two higher priority codes among the four. Furthermore, in a severe condition where there is no available modulating circuits remaining, the number of codes assigned the highest priority "pri 1" may increase. In such a case, the base station forcibly disconnects a presently engaged code signal which has a relatively lower priority, so as to provide an available demodulating circuit for a new code having a higher priority. Moreover, in the signal sent from a mobile terminal, the number of codes assigned the highest priority "pri 1" may increase. In such a case, based on own judgement, the base station can disconnect a code signal of other terminal when the priority of this code signal is low.

As described above, the present invention puts a priority to each code signal at a transmitter side prior to transmission of the multi-code signal. Thus, the present invention makes it possible to use a higher priority code signal to transmit important information. The receiver side can use the priority of each code signal in judging whether or not this code signal can be abandoned. The allocation of receiving devices, such as demodulating circuits, can be determined with reference to the priority of each code signal. Thus, it becomes possible to prevent the receiver side from losing important information contained in the multi-code signal.

Fig. 22 is a block diagram showing a transmitter arrangement employed in a mobile terminal in accordance with the present invention.

The mobile terminal MS comprises an information signal control section 311 which converts an information signal into a plurality of parallel signals. A priority is put to each parallel signal. According to the above-described example of music information, a music signal is entered into the information signal control section 311 and encoded as a plurality of (e.g., 5 as shown in Fig. 22) parallel data. More specifically, a plurality of bandpass filters are used to separate the music signal into a plurality of signals of different frequency bands. Each of the separated signals is encoded. Three voice signals of a low-frequency band are assigned to the highest priority "pri 1" and is then supplied to corresponding code signal generating circuits 312 to 314, respectively. A voice signal belonging to a more higher frequency band is assigned to the next highest priority "pri 2" and is then supplied to a corresponding code signal generating circuit 315. A voice signal belonging to the highest frequency band is assigned to the lowest priority "pri 3" and is then supplied to a corresponding code signal generating circuit 316.

Each of the code signal generating circuits 312 to 316 spreads a received signal. All of outputs of code signal generating circuits 312 to 316 are supplied to a signal transmitting section 317. The signal transmitting section 317 adds a previously-described sync signal to the composed code signals and then transmits a resultant multi-code signal.

The above-described embodiment is based on the uplink communication control. Hereinafter, a downlink communication control will be explained.

Fig. 27 is a block diagram showing a transmitter arrangement employed in a base station in accordance with another embodiment of the present invention. As shown in the drawing, the base station comprises a plurality of transmitters each consisting of a single code signal generating circuit (361-364) and a single signal transmitting section (371-374). The base station uses only one transmitter 351 to transmit a single code signal to a mobile terminal MS1 as it is a single code user. On the other hand, the base station uses two transmitters 352 and 353 to transmit a 2-multicode signal (i.e., multi-code signal having a multi-code number of 2) to a mobile terminal MS2 as it is a 2-multicode user.

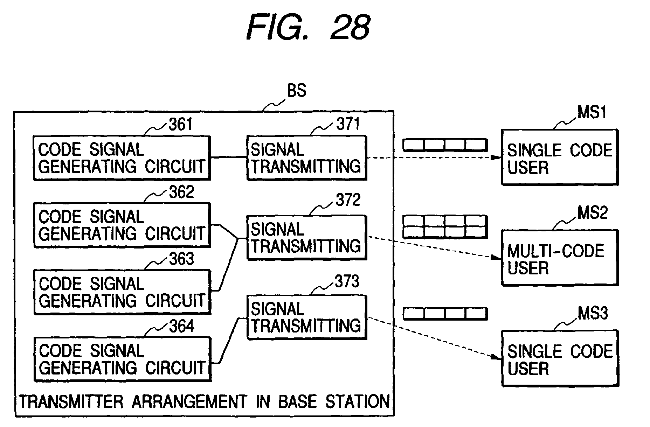

Fig. 28 is a block diagram showing a transmitter arrangement employed in a base station in accordance with another embodiment of the present invention. According to this arrangement, a plurality of code signal generating circuits 361to 364 and a plurality of signal transmitting sections 371 to 374 are independently provided. The base station uses the code signal generating circuit 361 and the signal transmitting section 371 to transmit a code signal to a mobile terminal MS1 which is a single code user. An output of the code signal generating circuit 361 is supplied to the signal transmitting section 371. Then, the signal transmitting section 371 transmits a single code signal. On the other hand, the base station uses two code signal generating circuits 362 and 363 and the signal transmitting section 372 to transmit a multi-code signal having a multi-code number of 2 to a mobile terminal MS2 which is a 2-multicode user. An information signal control section (not shown) supplies parallel data to two code signal generating circuits 362 and 363. Outputs of the code signal generating circuits 362 and 363 are sent to the signal transmitting section 372. The signal transmitting section 372 adds a sync signal to the composed code signals and then transmits a resultant 2-multicode signal.

As described above, the transmitter arrangement employed in a base station has a limited number of transmitting devices, such as transmitters and code signal generating circuits. Accordingly, a priority is put to each code of the multi-code signal. The priority is taken into consideration in deciding allocation of the limited number of code signal generating circuits for signals of respective mobile terminals (in the case of Fig. 28).

For example, in the example shown in Fig. 28, it is now assumed that a requested code number of a signal transmitted to the mobile terminal MS2 (i.e., a multi-code user) is 3. When there is no available signal generating circuit as shown in the drawing, two code signals having higher priorities are selectively supplied to the code signal generating circuits 362 and 363 while a non-elected code signal having a lower priority is not transmitted. However, the remaining code signal having a lower priority can be transmitted later when any code signal generating circuit becomes available. Alternatively, it is possible to use one of the code signal generating circuits which are currently used for transmitting a multi-code signal for another multi-code user (not shown), if there is any code signal having a priority more lower than that of the above remaining code signal. Thus, the transmission of a more lower priority code signal of another multi-code user is forcibly stopped. Upon stop of this more lower priority code signal, one code signal generating circuit becomes available and can be allocated to the remaining code signal to be sent to the mobile terminal MS2.

In this manner, transmitting code signals according to their priorities makes it possible to surely transmit a required minimum level of information considering their importance.

Another embodiment of the present invention will be explained with reference to Fig. 24. This embodiment is characterized in that the transmission power of each code signal is differentiated in accordance with its priority.

According to the CDMA system, an interference amount gives a large influence to the system capacity. It is therefore preferable to suppress the interference as much as possible. Hence, as shown in Fig. 24, a transmission power "B" for the lower-priority code signals (pri 2, pri 3) are set to be smaller than a transmission power "A" for the higher-priority code signal (pri 1).

The signal, having a low transmission power, can be demodulated only when the communication condition is good. Accordingly, the code signal having a lower priority can be demodulated only when the base station has a sufficient number of demodulating circuits and the communication condition is good.

Similarly, when a base station transmits a multi-code signal to a mobile terminal, the transmission power for a lower-priority code signal is set to be smaller than a transmission power for the higher-priority code signal. With this arrangement, it becomes possible to reduce the interference of a transmission signal with a neighboring base station. The mobile terminal can demodulate a lower-priority code signal only when the communication condition is good.

Accordingly, this embodiment makes it possible to reduce the transmission power and therefore reduce the interference amount. The efficiency of the system can be improved.

As described above, the CDMA mobile communication system of the present invention puts a priority to each code of a multi-code signal. This solves the problem that important information cannot be transmitted due to shortage of facilities. Thus, the present invention is preferably applied to the variable rate transmission.

Furthermore, the CDMA mobile communication system of the present invention differentiates the transmission power in accordance with the priority of each code signal. Thus, it becomes possible to reduce the interference amount.

## Claims

1. A base station apparatus for a CDMA mobile communication system, characterized by
a receiver arrangement in which sync acquisition/ tracking circuit sections (11-13) and demodulation circuit sections (21-24) are separately arranged; and
a plurality of receivers (1-3), each having a single sync acquisition/ tracking circuit section and at least one single demodulation circuit section;
wherein demodulation of a multi-code signal is implemented by using a designated one of said plurality of receivers, said designated receiver (3) having a plurality of demodulation circuit sections (23, 24) a total number of which corresponds to a code number of said multi-code signal, and
sync acquisition and tracking processing for said multi-code signal is implemented in said single circuit sync acquisition/tracking circuit (13) equipped in said designated receiver (3), while said multi-code signal is demodulated in said plurality of demodulation circuit sections (23, 24) equipped in said designated receiver (3).

2. A base station apparatus for a CDMA mobile communication system, characterized by
a receiver arrangement in which sync acquisition/ tracking circuit sections (11-13) and demodulation circuit sections (21-24) are separately arranged; and
a connecting means (31) for adaptively connecting an output of one of said sync acquisition/ tracking circuit sections (11-13) to an arbitrary number of said demodulation circuit sections (21-24);
wherein demodulation of a multi-code signal is implemented by selecting one of said sync acquisition/ tracking circuit sections (11-13) to perform sync acquisition and tracking processing for said multi-code signal, and then causing said connecting means (31) to adaptively connect an output of said selected sync acquisition/tracking circuit section to a plurality of demodulation circuit sections (22, 23) a total number of which corresponds to a code number of said multi-code signal, thereby demodulating said multi-code signal.

3. A base station apparatus for a CDMA mobile communication system, characterized by
a receiver arrangement in which sync acquisition/tracking circuit sections (11-13) and demodulation circuit sections (21-24) are separately arranged;
a plurality of receivers (1-3), each comprising only one sync acquisition/ tracking circuit section and only one demodulation circuit section; and
said receiver arrangement comprising at least one additional demodulation circuit section (24) a total number of which is smaller by one than a code number of a multi-code signal to be received,
wherein demodulation of said multi-code signal is implemented by using a designated one (3) of said plurality of receivers and said at least one additional demodulation circuit section (24), in which said only one sync acquisition/ tracking circuit section (13) of said designated receiver (3) performs sync acquisition and tracking processing for said multi-code signal, while said only one demodulation circuit section (23) in said designated receiver (3) and said at least one additional demodulation circuit section (24) cooperatively demodulate the multi-code signal.

4. A base station apparatus for a CDMA mobile communication system, characterized by
a receiver arrangement in which a plurality of sync acquisition/ tracking circuit sections (11-13), a plurality of propagation path estimating sections (41-43) being connected to said sync acquisition/ tracking circuit sections respectively, and signal demodulating circuit sections (51-54) are separately arranged; and
a connecting means (31) for adaptively connecting an output of one of said propagation path estimating sections (41-43) to an arbitrary number of said signal demodulating circuit sections (51-54);
wherein demodulation of a multi-code signal is implemented by using one (12) of said plurality of sync acquisition/ tracking circuit sections (11-13) to perform sync acquisition and tracking processing for said multi-code signal, and using the propagation path estimating section (42) connected to said one (12) of said sync acquisition/ tracking circuit sections to estimate propagation characteristics of a propagation path of said multi-code signal, and causing said connecting means (31) to adaptively connect an output of said propagation path estimating section (42) to a plurality of signal demodulating circuit sections (52, 53) a total number of which corresponds to a code number of said multi-code signal.

5. A communication method applicable to a base station of a CDMA mobile communication system, said base station comprising a receiver arrangement in which sync acquisition/ tracking circuit sections and demodulating circuit sections are separately arranged, or said sync acquisition/ tracking circuit sections, propagation path estimating circuits and signal demodulating circuit sections are separately arranged,
said communication method characterized by the steps of:
receiving a connection request transmitted from a new mobile terminal to said base station; and
reducing a multi-code number of said new mobile terminal or other mobile terminal in response to said connection request when a total number of available demodulating circuit sections or available signal demodulating circuit sections in said base station is smaller than a code number of a multi-code signal relating to said connection request, thereby allowing said new mobile terminal to be connected to said base station.

6. A base station apparatus for a CDMA mobile communication system, characterized by
a receiver arrangement in which sync acquisition/tracking circuit sections and demodulating circuit sections are separately arranged, or said sync acquisition/ tracking circuit sections, propagation path estimating circuits and signal demodulating circuit sections are separately arranged; and
a means for connecting said demodulating circuit sections not used for communication to said sync acquisition/ tracking circuit sections, or connecting said signal demodulating circuit sections not used for communication to said sync acquisition/ tracking circuit sections, thereby flexibly responding to a change of a multi-code number.

7. A base station apparatus for a CDMA mobile communication system, characterized by
a transmitter arrangement in which sync signal inserting circuit sections (81-83) and signal modulating circuit sections (61-64) are separately arranged,
wherein a multi-code signal is transmitted by using one (82) of said sync signal inserting circuit sections (81-83) and a plurality signal modulating circuit sections (61-63) connected to said one (82) of said sync signal inserting circuit sections.

8. A CDMA mobile communication system using a multi-code signal for performing communication between a base station and mobile terminals having various information transmitting rates,
characterized in that
a mobile terminal, when located at a predetermined distant position far from said base station, transmits the multi-code signal with a reduced multi-code number which is smaller than an ordinarily required value, said multi-code number representing the number of multiple codes being simultaneously transmitted by said multi-code signal.

9. A CDMA mobile communication system using a signal having a variable spreading factor for performing communication between a base station and mobile terminals having various information of different transmitting rates,
characterized in that
a mobile terminal, when located at a predetermined distant position far from said base station, transmits the signal with an increased spreading factor which is larger than an ordinarily required value.

10. The CDMA mobile communication system in accordance with claim 8 or 9, wherein said base station, when transmitting a signal to said mobile terminal located at a predetermined distant position far from said base station, reduces a multi-code number representing the number of multiple codes simultaneously transmitted by said signal or increases the spreading factor of the signal.

11. A CDMA mobile communication system using a multi-code signal for performing communication between a base station and mobile terminals having various information transmitting rates,
characterized in that
a mobile terminal located closely to said base station, when said base station has communication quality higher than a predetermined guaranteed level, transmits the multi-code signal with an increased multi-code number which is larger than an ordinarily required value, said multi-code number representing the number of multiple codes being simultaneously transmitted by said multi-code signal.

12. A CDMA mobile communication system using a signal having a variable spreading factor for performing communication between a base station and mobile terminals having various information transmitting rates,
characterized in that
a mobile terminal located closely to said base station, when said base station has communication quality higher than a predetermined guaranteed level, transmits the signal with a reduced spreading factor which is smaller than an ordinarily required value.

13. The CDMA mobile communication system in accordance with claim 11 or 12, wherein said base station, when having communication quality higher than a predetermined guaranteed level, increases a multi-code number representing the number of multiple codes simultaneously transmitted by said signal or decreases the spreading factor of the signal in transmitting a signal to said mobile terminal located closely to said base station.

14. A CDMA mobile communication system using a multi-code signal or a variable spreading factor signal for performing communication between a base station and mobile terminals having various information transmitting rates,
characterized in that
acceptance of a connection request from a mobile terminal having a high information transmitting rate is restrained when the communication quality is worsened in a neighboring base station.

15. A CDMA mobile communication system using a multi-code signal or a variable spreading factor signal for performing communication between a base station and mobile terminals having various information transmitting rates,
characterized in that
a transmission rate of a signal sent form or to a mobile terminal having a high information transmitting rate is decreased when the communication quality is worsened in a neighboring base station.

16. A CDMA communication system using a multi-code signal for performing communication between a base station and mobile terminals having various information transmitting rates,
characterized in that
said mobile terminal puts a priority to each code of said multi-code signal, and
said base station determines allocation of receiving devices in accordance with said priority of each code when said base station receives said multi-code signal.

17. A CDMA communication system using a multi-code signal for performing communication between a base station and mobile terminals having various information transmitting rates,
characterized in that
said base station puts a priority to each code of a multi-code signal to be transmitted, and determines allocation of transmitting devices thereof in accordance with said priority of each code when said base station transmits said multi-code signal.

18. A CDMA communication system using a multi-code signal for transmitting various information signals of different transmitting rates,
characterized in that
a transmitter apparatus puts a priority to each code of said multi-code signal, and determines a transmission power of each code in accordance with said priority when said transmitter apparatus transmits said multi-code signal.
